# EUROPÄISCHE PATENTSCHRIFT

(11) **EP 2 990 201 B1**
(45) Veröffentlichungstag und Bekanntmachung des Hinweises auf die Patenterteilung: **23.12.2020**
(21) Anmeldenummer: 15182986.8
(22) Anmeldetag: 28.08.2015
(51) Int. Cl.: B32B 37/12, B32B 37/00, B32B 37/22, B32B 37/10, B32B 37/16

(54) **VORRICHTUNG UND VERFAHREN ZUM HERSTELLEN EINES SUBSTRATVERBUNDES, DER ZUMINDEST EIN ERSTES BANDFÖRMIGES SUBSTRAT UND EIN ZWEITES BANDFÖRMIGES SUBSTRAT UMFASST**
DEVICE AND METHOD FOR PRODUCING A COMPOSITE SUBSTRATE COMPRISING AT LEAST ONE FIRST TAPE-SHAPED SUBSTRATE AND A SECOND TAPE-SHAPED SUBSTRATE
DISPOSITIF ET PROCEDE DE FABRICATION D'UN SUBSTRAT COMPOSITE, QUI COMPREND AU MOINS UN PREMIER SUBSTRAT EN FORME DE BANDE ET UN SECOND SUBSTRAT EN FORME DE BANDE

(30) Priorität: 29.08.2014 DE 102014112490
(43) Veröffentlichungstag der Anmeldung: 02.03.2016
(73) Patentinhaber: Beier, Uwe, 01458 Ottendorf-Okrilla (DE)
(72) Erfinder: Beier, Uwe, 01458 Ottendorf-Okrilla (DE)
(74) Vertreter: Riechelmann & Carlsohn Patentanwälte PartG mbB

(56) Entgegenhaltungen:
- WO-A2-2011/041806
- DE-A1- 3 840 704
- DE-A1- 10 214 010
- US-A1- 2009 324 960

## Beschreibung

Die Erfindung betrifft eine Vorrichtung und ein Verfahren zum Herstellen eines Substratverbundes, der zumindest ein erstes bandförmiges Substrat und ein zweites bandförmiges Substrat umfasst.

Flexible Substrate können aus den vielfältigsten Materialien bestehen, die bekanntesten sind Kunststoffe, Metalle und Gläser. Die flexiblen Substrate werden üblicherweise in Form einer Rolle, die auch als Coil bezeichnet wird, transportiert und aufbewahrt. Für die Bearbeitung werden die flexiblen Substrate von einem Coil abgewickelt, was in einer als Abwickler bezeichneten Wickelstation einer Bearbeitungsvorrichtung erfolgt kann, und dann in der Prozess-Sektion der Vorrichtung bearbeitet. Im Anschluss werden die bearbeiteten flexiblen Substrate in einer ersten Variante auf einen anderen Coil wieder aufgewickelt, was in einer als Aufwickler bezeichneten Sektion der Vorrichtung erfolgen kann. Diese Variante wird als "Roll-to-Roll" bezeichnet. In der ersten Variante benötigt die Bearbeitungsmaschine zur Verbindung von mindestens zwei flexiblen Substraten also mindestens zwei Wickelstationen. In einer zweiten Variante wird das bearbeitete Substrat in einzelne Stücke, die auch als "Sheets" bezeichnet werden, zerteilt. Diese Variante wird als "Roll-to-Sheet" bezeichnet. Aus dem Stand der Technik sind Vorrichtungen zur flächigen Verbindung von flexiblen Substraten bekannt, welche mit Sheets - also Stücken - arbeiten. Die Prozessabfolge in diesen Vorrichtungen ist zwangsläufig nicht kontinuierlich, so dass die Produktivität an dieser Stelle also grundlegend begrenzt ist.

Aus dem Stand der Technik sind ferner Bearbeitungsvorrichtungen zur flächigen Verbindung von flexiblen Substraten, welche die Ausgangsmaterialien vom Coil verarbeiten, und zwar in unterschiedlichen Ausführungsformen und Gestaltungen bekannt. Es ist allerdings bisher nicht möglich, flächige Substrate in einem kontinuierlichen Verfahren miteinander zu verbinden, wenn dazu eine hermetisch abgeschlossene Umgebung erforderlich ist.

WO 87/06626 A1 offenbart ein Verfahren zur Beschichtung eines Glassubstrates mittels Kathodenzerstäubung. Bei diesem Verfahren ist eine geschlossene Vakuumkammer vorgesehen, in der eine erste Rolle angeordnet ist, von der das Glassubstrat abgewickelt wird. Das Glassubtrat läuft an einer Kathode vorbei und wird anschließend auf einer zweiten Rolle aufgewickelt, die ebenfalls in der Vakuumkammer angeordnet ist. Beim Aufwickeln des Glassubstrates wird eine Schutzschicht zwischen die Lagen des Glassubstrates eingefügt. Es ist aber nicht vorgesehen, mehrere flexible Substrate miteinander zu verbinden. Zudem ist die Anordnung der Rollen in der Kammer nachteilig, weil es erforderlich ist, die in der Kammer herrschende Atmosphäre an die Umgebungsbedingungen anzupassen, wenn eine Rolle gewechselt werden muss.

Bekannt sind Bearbeitungsvorrichtungen zur flächigen Verbindung von dünnen Substraten, welche für den Verbindungsprozess eine hermetisch abgeschlossene Umgebung nutzten. Eine derartige Vorrichtung wird beispielsweise in WO 2011/041806 A2 beschrieben. Allerdings können mit derartigen Vorrichtungen nur Sheets verarbeitet werden. Die Bearbeitung erfolgt demzufolge diskontinuierlich, was der Produktivität enge Schranken setzt und zudem energetisch aufwendig und damit kostenintensiv ist. Für jedes einzelne Substrat oder eine Substratcharge muss in der Prozess-Sektion der Vorrichtung ein von der Umgebung unterschiedlicher Zustand hergestellt werden. Nach der Bearbeitung der Substrate muss die Prozess-Sektion wieder auf Atmosphärenbedingungen gebracht werden, bevor sie zur Entnahme der bearbeiteten Sheets geöffnet werden kann. Überdies sind die Elemente der Vorrichtung derart angeordnet, dass eine Beschädigung der behandelten Substratoberfläche nicht ausgeschlossen werden kann.

WO 2014/032931 A1 offenbart ein Verfahren zur Bearbeitung von Dünnglaszuschnitten. Dabei sind die Zuschnitte auf einer Trägerfolie angeordnet. Die Zuschnitte und die Trägerfolie können gemeinsam als sogenanntes Glassubstratband für die Lagerung und den Transport zu einer Rolle aufgerollt oder mäanderförmig geschichtet werden. Die Bearbeitung der Zuschnitte auf der Trägerfolie kann einen Beschichtungs- oder einen Laminierprozess umfassen. Das Glassubstratband kann zwar in einem Roll-to-Roll-Verfahren bearbeitet werden. Weder ein flächiges Verbinden von zwei Substraten noch eine Bearbeitung in einer hermetisch abgeschlossenen Umgebung sind vorgesehen. Auch zur Führung des Glasbandes gibt WO 2014/032931 A1 keine Hinweise. Selbst das erste Substrat muss als Zuschnitt bereitgestellt werden.

Aus dem Stand der Technik ist bisher kein Verfahren bekannt, das das flächige Verbinden von zumindest zwei Substraten in einem Raum, der von der Umgebung abgeschlossen ist, in einem kontinuierlichen Prozess ermöglicht, d.h. wonach die Substrate erst innerhalb der Verbindungskammer in Kontakt miteinander gelangen.

Die Vorrichtung soll dabei insbesondere so gestaltet sein, dass eine Beschädigung der Substrate oder des Verbundes aus den Substraten verhindert wird. Für ein solches kontinuierliches Verfahren ist ferner eine geeignete Vorrichtung erforderlich, die einen solchen Raum zur Verfügung stellt und eine kontinuierliche Zu- und Abführung der Substrate ermöglicht.

US2009/0 324 960 A1 offenbart ein Verfahren zur Herstellung einer bituminösen Membran, die mit Photovoltaik-Zellen ausgestattet sein soll. Das Verfahren nutzt eine Laminierungseinrichtung, die aus zwei Pressen besteht. DE 38 40 704 A1 offenbart ein Verfahren zur Erzeugung eines kupferplattierten Schichtstoffes. Dazu ist eine Vakuumkammer vorgesehen, in der zwei Paare von Heißpresswalzen angeordnet sind. DE 102 14 010 A1 offenbart ein Verfahren zur Herstellung von Verbundstoffen. Der Verbundstoff wird in einem Trockner getrocknet, der ein Presswerk aufweist.

Aufgabe der Erfindung ist es, die Nachteile nach dem Stand der Technik zu beseitigen. Es soll insbesondere eine Vorrichtung mit einem von der Umgebung abgeschlossenen Raum angeben werden, die das flächige Verbinden von zumindest zwei Substraten zu einem Substratverbund in einem kontinuierlichen Prozess gestattet. Ferner soll ein Verfahren zum flächigen Verbinden von zumindest zwei Substraten zu einem Substratverbund angegeben werden, das in der erfindungsgemäßen Vorrichtung kontinuierlich ausgeführt werden kann.

Diese Aufgabe wird durch die Merkmale der Ansprüche 1 und 8 gelöst. Zweckmäßige Ausgestaltungen der Erfindungen ergeben sich aus den Merkmalen der Unteransprüche.

Nach Maßgabe der Erfindung ist eine Vorrichtung zum Herstellen eines Substratverbundes, der zumindest ein erstes bandförmiges Substrat, ein zweites bandförmiges Substrat und ein Verbindungsmittel, das auf eine erste Flächenseite des ersten Substrates aufgetragen ist, umfasst, vorgesehen, wobei die Vorrichtung eine von der Umgebung abgeschlossene Verbindungskammer aufweist, in der von der Umgebung abweichende physikalische und/oder chemische Bedingungen herrschen. Die Vorrichtung weist ferner auf:
- Führungseinrichtungen zum Führen des ersten Substrates, auf dessen erste Flächenseite ein erstes Verbindungsmittel aufgetragen ist, und des zweiten Substrates derart, dass in der Verbindungskammer eine erste Flächenseite des zweiten Substrates der ersten Flächenseite des ersten Substrates zugewandt ist; und
- eine in der Verbindungskammer angeordnete Verbindungseinrichtung zum Herstellen des Substratverbundes,
wobei die Verbindungseinrichtung zum Herstellen des Substratverbundes zumindest ein Paar voneinander unter Ausbildung eines Spaltes gegenüberliegenden Rollen aufweist, durch den Spalt die Substrate unter Erhalt des Substratverbundes geführt werden können, so dass das Verbindungsmittel, das sich auf der ersten Flächenseite des ersten Substrates befindet, in Kontakt mit der ersten Flächenseite des zweiten Substrates gelangen kann, und die Rollen ein Zusammenlegen der Substrate in dem Spalt auf eine substratschonende Weise bewirken können, ohne dass die Rollen der Verbindungseinrichtung Druck auf die Substrate ausüben, und wobei die Vorrichtung ferner eine Kalibrierungseinrichtung zum Kalibrieren der Stärke des Substratverbundes umfasst.

Die erfindungsgemäße Vorrichtung ermöglicht es, einen Substratverbund, der zumindest zwei bandförmige Substrate aufweist, in einem kontinuierlichen Verfahren herzustellen.

Vorzugsweise weist die erfindungsgemäße Vorrichtung abgedichtete Durchführungen zum Einbringen der Substrate in die Verbindungskammer auf. Das ist jedoch nicht zwingend erforderlich, insbesondere dann, wenn Bereitstellungseinrichtungen, beispielsweise Abwickler, in der Verbindungskammer angeordnet sind. Vorzugsweise weist die erfindungsgemäße Vorrichtung eine abgedichtete Durchführung zum Abführen des Substratverbundes aus der Verbindungskammer auf.

Vorzugsweise weist die erfindungsgemäße Vorrichtung eine erste Auftragungseinrichtung zum Auftragen des Verbindungsmittels auf die erste Flächenseite des ersten Substrates auf. Das ist jedoch nicht zwingend erforderlich. Alternativ kann vorgesehen sein, dass die Vorrichtung eine Bearbeitungseinrichtung aufweist, in der das erste Substrat einer Bearbeitung unterzogen wird. Umfasst eine solche Bearbeitung das Aufbringen einer Schicht auf die erste Flächenseite des ersten Substrates, so kann diese Schicht als Verbindungsmittel dienen.

Die erfindungsgemäße Vorrichtung weist zweckmäßigerweise Bereitstellungsmittel zum kontinuierlichen Bereitstellen der Substrate auf. Bei den Bereitstellungsmitteln kann es sich beispielsweise um Abwickler zum Abwickeln eines Substrates von einer Rolle oder um Abnehmer zum Abnehmen der Substrate von einem mäanderförmigen Stapel des Substrates handeln. Vorzugsweise werden die Substrate als Rollenware in Form von Coils bereitgestellt. In diesem Fall sind für jedes der Substrate Abwickler vorgesehen. Mittels der Führungsmittel werden die Substrate von den Abwicklern zu der Verbindungseinrichtung geführt. Die Bereitstellungseinrichtungen können innerhalb oder außerhalb der Verbindungskammer angeordnet sein. Es ist jedoch bevorzugt, dass die Bereitstellungseinrichtungen außerhalb der Verbindungskammer angeordnet sind.

Erfindungsgemaß weist die Vorrichtung eine erste Auftragungseinrichtung zum Auftragen eines Verbindungsmittels auf eine erste Flächenseite des ersten Substrates auf. Mittels der Führungseinrichtungen wird das erste Substrat so geführt, dass es vor dem Einreichen der Verbindungseinrichtung in der Verbindungskammer die erste Auftragseinrichtung passiert. Die erste Auftragungseinrichtung kann innerhalb oder außerhalb der Verbindungskammer angeordnet sein. Es ist jedoch bevorzugt, dass die erste Auftragungseinrichtung außerhalb der Verbindungskammer angeordnet ist.

Mittels der ersten Auftragungseinrichtung wird ein Verbindungsmittel auf die erste Flächenseite des ersten Substrates aufgetragen. Die erste Flächenseite des ersten Substrates ist diejenige Flächenseite, die in der Verbindungskammer der ersten Flächenseite des zweiten Substrates gegenüberliegt. Das Verbindungsmittel befindet sich dann zwischen der ersten Flächenseite des ersten Substrates und der ersten Flächenseite des zweiten Substrates. Mittels der in der Verbindungskammer angeordneten Verbindungseinrichtung werden das erste Substrat und das zweite Substrat an ihren ersten Flächenseiten über das Verbindungsmittel miteinander verbunden. Auf diese Weise werden das erste Substrat und das zweite Substrat flächig miteinander verbunden. Umfasst der Substratverbund nur zwei bandförmige Substrate, so bilden die zweiten Flächenseiten des ersten Substrates und des zweiten Substrates die Außenseiten des Substratverbundes.

In der Verbindungskammer sind erfindungsgemäß von der Umgebung abweichende physikalische und/oder chemische Bedingungen eingestellt. Zu diesem Zweck ist die Verbindungskammer von der Umgebung abgeschlossen, so dass sich die physikalischen und/oder chemischen Bedingungen in der Verbindungskammer von denen außerhalb der Verbindungskammer, d. h. den Umgebungsbedingungen, unterscheiden. Insbesondere können sich Druck und/oder Temperatur in der Verbindungskammer von dem Druck bzw. der Temperatur in der Umgebung unterscheiden. Es ist jedoch nicht erforderlich, dass sich der Druck, die Temperatur oder beides in der Verbindungskammer von dem Druck, der Temperatur oder beiden der Umgebung unterscheiden. Ebenso kann die Verbindungskammer mit einem Gas anderer Zusammensetzung gefüllt sein. Auf diese Weise können inerte Bedingungen in der Verbindungskammer geschaffen werden. Beispielsweise kann in der Verbindungskammer ein Unterdruck, insbesondere Vakuum, oder ein Überdruck eingestellt sein. Ebenso kann die Verbindungskammer mit Stickstoff gefüllt sein. Zum Einstellen der physikalischen und/oder chemischen Bedingungen in der Verbindungskammer kann die Vorrichtung eine für diesen Zweck geeignete Einrichtung umfassen, beispielsweise eine Pumpe zur Erzeugung eines Vakuums, eine Überdruck-Gaszuführung zur Erzeugung inerter Bedingungen in der Verbindungskammer oder beides. Der in der Verbindungskammer eingestellte Unterdruck kann beispielsweise in einem Bereich von 10E-7 mbar bis 100 mbar, bevorzugt 0,1 mbar bis 10 mbar liegen.

Bei der erfindungsgemaß vorgesehenen Verbindungseinrichtung zum Herstellen des Substratverbundes handelt es sich um ein Paar von einander unter Ausbildung eines Spaltes gegenüberliegenden Rollen. Durch den Spalt werden die Substrate unter Erhalt des Substratverbundes geführt. Die Rollen bewirken ein Zusammenlegen der Substrate in dem Spalt. Dieses Zusammenlegen erfolgt auf eine substratschonende Weise, die daher auch als "sanftes Zusammenlegen" bezeichnet werden kann. Es ist nicht erforderlich, dass die Rollen der Verbindungseinrichtung Druck auf die Substrate ausüben, auch wenn dies vorgesehen sein kann. Werden das erste Substrat und das zweite Substrat durch den Spalt zwischen den Rollen der Verbindungseinrichtung geführt, so gelangt das Verbindungsmittel, das sich auf der ersten Flächenseite des ersten Substrates befindet, in Kontakt mit der ersten Flächenseite des zweiten Substrates. Das Verbindungsmittel kann dann eine Verbindung zwischen den beiden ersten Flächenseiten bewirken. Damit wird ein Substratverbund mit einem flächigen Verbund des ersten und zweiten Substrates erhalten. Die erfindungsgemäß vorgesehene Verbindungseinrichtung kann mehrere derartige Paare von Rollen umfassen. Eine oder beide Rollen eines Paares von Rollen kann angetrieben sein. Die Rollen sollten Oberflächen besitzen, die für die Herstellung des Substratverbundes geeignet sind, wobei die Wahl der Oberflächeneigenschafen von Substraten abhängt, mit denen die Rollen in Kontakt kommen. Bevorzugt sind harte und glatte Oberflächen. In einer anderen bevorzugten Variante sind die Oberflächen gummiert. Eine oder mehrere der Rollen können temperiert, also geheizt oder gekühlt sein. Die Rollen der Verbindungseinrichtung werden im Folgenden auch als Verbindungsrollen bezeichnet.

Im Anschluss an die Verbindungseinrichtung durchläuft der Substratverbund eine Kalibrierungseinrichtung zum Kalibrieren der Stärke des Substratverbundes. Die Kalibrierungseinrichtung kann in der Verbindungskammer angeordnet sein. Das Kalibrierungsmittel führt die Substrate des Substratverbundes auf ein vorgegebenes Stärkenmaß zusammen. Auf diese Weise übt es eine Kalibrierungsfunktion aus. Bei der Kalibrierungseinrichtung kann es sich um ein Paar von einander unter Ausbildung eines Spaltes gegenüberliegenden Rollen handeln. Durch den Spalt wird der Substratverbund geführt. Diese Rollen werden im Folgenden auch als Kalibrierrollen bezeichnet. Alternativ oder zusätzlich kann die Kalibrierungseinrichtung ein Paar einander unter Ausbildung eines Spaltes gegenüberliegende Ebenen von Handhabungseinrichtungen umfassen. Durch den Spalt zwischen den Ebenen wird der Substratverbund geführt. Derartige Ebenen von Handhabungseinrichtungen werden beispielsweise in EP 2 432 011 A1 beschrieben. Diese Ebenen werden im Folgenden auch als Kalibrierebenen bezeichnet.

Der mittels der erfindungsgemäßen Vorrichtung erhaltene Substratverbund kann anschließend zur Weiterverarbeitung als Band oder als Zuschnitt seiner Bestimmung zugeführt werden. Soll der Substratverbund als Band bereitgestellt werden, so kann die Vorrichtung einen Aufwickler zum Aufwickeln des Substratverbundes zu einem Coil aufweisen. Alternativ kann der Substratverbund mittels einer Legeeinrichtung zu einem mäanderförmigen Stapel gelegt werden. Soll das Substratband hingegen zugeschnitten werden, kann die erfindungsgemäße Vorrichtung eine Trenneinrichtung aufweisen, die das Substratband in Zuschnitte zerlegt. Der Aufwickler und die Legeeinrichtung können innerhalb der Verbindungskammer angeordnet sein. Vorzugsweise sind sie aber außerhalb der Verbindungskammer angeordnet. Die Trenneinrichtung sollte außerhalb der Verbindungskammer angeordnet sein.

Die erfindungsgemäße Vorrichtung weist vorzugsweise abgedichtete Durchführungen zum kontinuierlichen Einbringen der Substrate in die Verbindungskammer und eine abgedichtete Durchführung zum kontinuierlichen Abführen des Substratverbundes aus der Verbindungskammer auf. Die erfindungsgemäße Vorrichtung kann weitere Durchführungen aufweisen. Es kann vorgesehen sein, dass zumindest eine Bereitstellungseinrichtung für ein Substrat außerhalb der Verbindungskammer angeordnet ist, und zumindest eine Bereitstellungseinrichtung für ein Substrat innerhalb der Verbindungskammer angeordnet ist. Vorzugsweise sind die Bereitstellungseinrichtungen für alle Substrate außerhalb der Verbindungskammer angeordnet. Es können aber die Bereitstellungseinrichtungen für alle Substrate innerhalb der Verbindungskammer angeordnet sein. Nur eine Bereitstellungseinrichtung, die außerhalb der Verbindungskammer angeordnet ist, benötigt eine abgedichtete Durchführung zum Führen des Substrates in die Verbindungskammer.

Eine bevorzugte Durchführung zum Einbringen eines Substrates in die Verbindungskammer und zum Abführen des Substratverbundes aus der Verbindungskammer weist ein Paar von einander unter Ausbildung eines Spaltes gegenüberliegenden Rollen auf, die gegen die Wandung der Verbindungskammer abgedichtet sind. Die Durchführung kann mehrere derartige Paare von Rollen aufweisen, die gemeinsam einen Spalt ausbilden. Derartige Durchführungen werden in der unveröffentlichten deutschen Patentanmeldung Nr. 10 2014 105 747.3 des Anmelders beschrieben. Sie werden auch als Rollenventile bezeichnet. Das Substrat wird durch den Spalt einer solchen Durchführung derart geführt, dass das Substrat nur mit einer seiner Flächenseiten an einer Rolle des Paares von Rollen - oder im Falle von mehreren Paaren von Rollen an den auf einer Seite des Spaltes befindlichen Rollen - anliegt, während seine andere Flächenseite freiliegt und nicht in Kontakt mit Rollen gelangt. Die Flächenseite des Substrates, die an der oder den Rollen anliegt, ist vorzugsweise eine Flächenseite, die nicht in Kontakt mit einem Verbindungsmittel gelangt. Das sind beispielsweise die zweiten Flächenseiten des ersten und zweiten Substrates, wenn der Substratverbund nur diese beiden bandförmigen Substrate umfasst. Gelangt ein Substrat auf beiden seiner Flächenseiten in Kontakt mit einem Verbindungsmittel, so ist die Flächenseite des Substrates, die an einer Rolle des Paares von Rollen - oder im Falle von mehreren Paaren von Rollen an den auf einer Seite des Spaltes befindlichen Rollen - anliegt, die Flächenseite, auf die kein Verbindungsmittel mittels einer Auftragungseinrichtung aufgetragen ist.

Der Substratverbund wird durch den Spalt derart geführt, dass das Substrat mit einer seiner Außenseiten an einer Rolle des Paares von Rollen - oder im Falle von mehreren Paaren von Rollen an den auf einer Seite des Spaltes befindlichen Rollen - anliegt, während seine andere Außenseite freiliegt.

Die Rollenventile ermöglichen eine kontinuierliche Führung eines Substrates in die Verbindungskammer bzw. eine kontinuierliche Ausführung des Substratverbundes aus der Verbindungskammer.

Die Verbindungskammer kann ferner eine verschließbare Öffnung aufweisen, die einen Zugang zum Innenraum der Verbindungskammer ermöglicht. Das ist besondere dann vorteilhaft, wenn Wartungsarbeiten oder andere Serviceleistungen ausgeführt werden sollen.

Die erfindungsgemäß vorgesehenen Führungseinrichtungen zum Führen der Substrate werden im Folgen als erste Führungseinrichtungen bezeichnet. Sind weitere bandförmige Substrate, beispielsweise ein drittes bandförmiges Substrat, zur Herstellung des Substratverbundes vorgesehen, so kann die erfindungsgemäße Vorrichtung weitere erste Führungseinrichtungen umfassen. Ferner kann die erfindungsgemäße Vorrichtung zweite Führungseinrichtung zum Führen des Substratverbundes aufweisen. Die ersten und zweiten Führungseinrichtungen sind vorzugsweise Rollen. Diese Rollen werden im Folgenden auch als Führungsrollen bezeichnet. Die Rollen können angetriebene Rollen oder nicht-angetriebene Rollen sein. Vorzugsweise ist für jedes Substrat zumindest eine angetriebene Rolle vorgesehen, die einen Transport des Substratbandes bewirkt. Ferner ist zumindest auch eine der zweiten Führungseinrichtungen eine angetriebene Rolle, die einen Transport des Substratverbundes bewirkt. Für den Transport besonders empfindlicher Substrate kann alternativ oder zusätzlich zu angetriebenen Führungsrollen ein endliches oder endloses Transportband als Führungseinrichtung vorgesehen sein, das mit einer Flächenseite an der Flächenseite des Substrates anliegt, das nicht in Kontakt mit Verbindungsmitteln gelangt.

Die ersten Führungseinrichtungen sind vorzugsweise so angeordnet, dass sie nur eine Flächenseite eines Substrates kontaktieren. Das sind zweckmäßigerweise die Flächenseiten der Substrate, die nicht in Kontakt mit einem Verbindungsmittel gelangen. Soll mittels der erfindungsgemäßen Vorrichtung ein Substratverbund hergestellt werden, der nur zwei bandförmige Substrate, nämlich das erste und das zweite Substrat, umfasst, so sind die ersten Führungseinrichtungen so angeordnet, dass sie nur in Kontakt mit der zweiten Flächenseite der Substrate gelangen. Die Führungseinrichtungen, die das erste Substrat führen, stehen vorzugsweise nur in Kontakt mit dessen zweiter Flächenseite des ersten Substrates und nicht mit dessen erster Flächenseite.

Die zweiten Führungseinrichtungen können so angeordnet sein, dass sie nur mit einer der beiden Außenseiten des Substratverbundes in Kontakt stehen. Es kann aber auch vorgesehen sein, dass sich beide Außenseiten des Substratverbundes in Kontakt mit zweiten Führungseinrichtungen befinden.

Die bevorzugte Anordnung der ersten Führungselemente sorgt dafür, dass nur eine und nicht beide Flächenseiten in Kontakt mit den ersten Führungseinrichtungen steht, während die andere Flächenseite nicht in Berührung mit Führungseinrichtungen gelangt. Das schont eine der Flächenseiten, vorzugsweise die Flächenseite, auf die ein Verbindungsmittel aufgebracht wird. Soll ein Substratverbund hergestellt werden, der mehr als zwei bandförmige Substrate umfasst, so gibt es zwangsläufig zumindest ein Substrat, das in dem Substratverbund zwischen anderen Substraten liegt und als innenliegendes Substrat bezeichnet wird. Ein im Substratverbund innenliegendes Substrat kann auf beiden Flächenseiten in Kontakt mit Verbindungsmittel gelangen. In diesem Falle ist es bevorzugt, dass die ersten Führungsmittel zum Führen eines im Substratverbund innenliegenden Substrates nicht die Flächenseite dieses Substrates kontaktieren, auf die Verbindungsmittel mittels einer Auftragungseinrichtung aufgebracht wird, sondern dessen andere Flächenseite, die erst in der Verbindungseinrichtung in Kontakt mit Verbindungsmittel, das auf ein anderes Substrat mittels einer Auftragungseinrichtung aufgebracht wurde, kontaktieren. Wird auf ein Substrat kein Verbindungsmittel aufgetragen - das ist beispielsweise bei der Herstellung eines Substratverbundes, das nur zwei bandförmige Substrate umfasst, das zweite Substrat - so ist die Flächenseite, die in Kontakt mit den ersten Führungseinrichtungen steht, vorzugsweise die Flächenseite, die nicht in Kontakt mit einem Verbindungsmittel gelangt.

Die ersten Führungsmittel führen die Substrate in die Verbindungskammer, so dass die erste Flächenseite des zweiten Substrates der ersten Flächenseite des ersten Substrates zugewandt ist. Die erfindungsgemäße Vorrichtung ist auch zur Herstellung von Substratverbünden geeignet, die mehr als zwei bandförmige Substrate umfassen. Jedes weitere bandförmige Substrat wird ebenfalls mittels erster Führungseinrichtungen in die Verbindungskammer geführt, und zwar derart, dass eine Flächenseite des weiteren Substrates einer Flächenseite des ersten oder zweiten Substrates, vorzugsweise des zweiten Substrates, zugewandt ist.

Sind mehr als zwei bandförmige Substrate vorgesehen, so können weitere Auftragungseinrichtungen zum Auftragen von Verbindungsmitteln vorgesehen sein. Ist beispielsweise ein drittes bandförmiges Substrat vorgesehen, so kann die erfindungsgemäße Vorrichtung eine zweite Auftragungseinrichtung zum Auftragen eines Verbindungsmittels auf die zweite Flächenseite des zweiten Substrates umfassen. Die ersten Führungsmittel zum Führen des dritten bandförmigen Substrates führen dieses zu der Verbindungseinrichtung, so dass in der Verbindungskammer eine erste Flächenseite des dritten Substrates der zweiten Flächenseite des zweiten Substrates zugewandt ist. Mittels der Verbindungseinrichtung wird dann der Verbund zwischen dem ersten, dem zweiten und dem dritten Substrat hergestellt. Die zweite Auftragungsvorrichtung kann innerhalb oder außerhalb der Verbindungskammer angeordnet sein. Bevorzugt befindet sie sich außerhalb der Verbindungskammer. Es können weitere Auftragungseinrichtungen vorgesehen sein, wenn mehr als drei bandförmige Substrate verarbeitet werden.

Die Flächenseite eines Substrates, die in Kontakt mit den ersten Führungseinrichtungen gelangt, kann mittels einer Schutzfolie vor Beschädigungen durch erste Führungseinrichtungen geschützt werden. Die Schutzfolie kann als Rolle auf einem Abwickler bereitgestellt und über eine erste Führungsrolle derart in Kontakt mit dieser Flächenseite des Substrates gebracht werden, dass sie mit einer Flächenseite an der des Substrates anliegt. Derartige Schutzfolien werden in der Fachsprache auch als "Cover layer" bezeichnet.

Geeignete bandförmige Substrate sind Substrate aus den Materialien Kunststoff, Metall, Glas oder Kombinationen davon, wobei Substrate aus Metall oder Glas besonders bevorzugt sind. Bei den Substraten kann es sich um Folien handeln. Die Substrate eines Substratverbundes können aus gleichen oder unterschiedlichen Materialien bestehen. Auch ein einzelnes Substrat kann aus unterschiedlichen Materialien bestehen. Beispielsweise kann ein Substrat einen bandförmigen Träger aufweisen, auf dem flächige Zuschnitte angeordnet sind. Die flächigen Zuschnitte bestehen dabei aus einem anderen Material als der bandförmige Träger. Beispielsweise kann der bandförmige Träger aus einem Kunststoff oder aus Metall bestehen, während die Zuschnitte Gläser sind.

Ein beispielhaftes bandförmiges Substrat besteht beispielsweise aus Glas. Dabei kann es sich um sehr dünnes Glas handeln, beispielsweise um Glas mit Dicken von 1,0 mm oder weniger, bevorzugt mit Dicken von 200 Mikrometern oder weniger, stärker bevorzugt 100 Mikrometer oder weniger, noch stärker bevorzugt 50 Mikrometer oder weniger.

Die bandförmigen Substrate bestehen zweckmäßigerweise aus einem biegsamen Material. Derartige Materialen werden in der Fachsprache auch als "semi-rigid" bezeichnet. Auf diese Weise wird sichergestellt, dass sie dem von den Führungseinrichtungen vorgegebenen Bahnlauf folgen können. Die ersten Führungseinrichtungen zur Führung eines Substrates sind vorzugsweise so angeordnet, dass der Bahnlauf des Substrates gekrümmt ist. Die erfindungsgemäße Vorrichtung ist daher für Substrate aus starren Materialen nicht geeignet. Die bandförmigen Substrate bestehen vorzugsweise aus flexiblen Materialien. Dies ist allerdings nicht erforderlich, wenn die Materialien zumindest biegsame Materialien sind.

Vorzugsweise sind die Materialien, aus denen die Substrate bestehen, dichte Materialien. Unter dichten Materialien werden hier Materialien verstanden, die dicht gegen Stoffe und Stoffgemische sind, die sich in der Atmosphäre befinden, und zwar sowohl in der Umgebung der Verbindungskammer als auch in der Verbindungskammer selbst. Insbesondere sollten die Materialien dicht gegen die Bestandteile der Luft sein, also insbesondere gegen Sauerstoff und das in der Luft befindliche Wasser. Substrate, die aus Kunststoff bestehen, sind nicht bevorzugt, wenn sie nicht oder nicht dauerhaft dicht sind. Allerdings können Substrate aus Kunststoff eingesetzt werden, wenn sie mit einer dichten Beschichtung versehen sind.

Es kann vorgesehen sein, dass ein oder mehrere Substrate eine Vorstrukturierung aufweisen, beispielsweise um Aussparungen für Kontaktanschlüsse freizulassen. Alternativ können derartige Aussparungen auch nach der Herstellung des Substratverbundes freigeschnitten werden. Eine Vorstrukturierung kann beispielsweise in einer oder beiden Substraten, die die Außenseiten des herzustellenden Substratverbundes bilden, vorgesehen sein.

Bei Substratverbünden, die mehr als zwei Substrate umfassen, können Strukturen oder Strukturelemente in die innenliegenden Substratlagen eingebracht sein, beispielsweise Öffnungen, elektrische Verbindungen oder beides. Die Öffnungen und Verbindungen ermöglichen Wechselwirkungen zwischen den Ebenen des Verbundsubstrates, was beispielsweise elektrische Schaltungen ermöglicht. In einer Variante kann mittels eines innenliegenden Substrates eine Stützstruktur in Form von Rahmen ausgebildet werden.

Zwischen Substratlagen des Substratverbundes können aktive Elemente in Form von Schichten ausgebildet sein. Die aktiven Schichten können mit Kontakten ausgestattet sein.

Bei dem Verbindungsmittel handelt es sich beispielsweise um ein Dichtmittel oder einen Klebstoff. Auch andere aus dem Stand der Technik bekannte Verbindungsmittel, die zum Verbinden flächiger Substrate eingesetzt werden, können in der vorliegenden Erfindung als Verbindungsmittel verwendet werden. Vorzugsweise werden Verbindungsmittel aus Materialien eingesetzt, die dicht gegen Stoffe und Stoffgemische sind, die sich in der Atmosphäre befinden, und zwar sowohl in der Umgebung der Verbindungskammer als auch in der Verbindungskammer selbst. Insbesondere sollten die Materialien dicht gegen die Bestandteile der Luft sein, also insbesondere gegen Sauerstoff und das in der Luft befindliche Wasser. In Abhängigkeit von dem herzustellenden Substratverbund kann es erforderlich sein, dass das Verbindungsmittel gegen spezielle Chemikalien resistent ist. Vorzugsweise sind die Verbindungsmittel aus einem dauerelastischen Material. Es ist bevorzugt, wenn das Material derart gewählt ist, dass das Verbindungsmittel gut auf dem Substrat, auf das es aufgebracht wird, haftet. Werden Verbindungsmittel auf verschiedene Substrate aufgebracht, so können die auf unterschiedliche Substrate aufgebrachten Verbindungsmittel gleich oder unterschiedlich sein. Werden auf beiden Flächenseiten eines Substrates Verbindungsmittel aufgebracht, so können auch diese Verbindungsmittel gleich oder unterschiedlich sein.

Das Verbindungsmittel kann in beliebiger Geometrie auf die Flächenseite eines Substrates aufgebracht werden. Es ist jedoch bevorzugt, dass das Verbindungsmittel derart aufgebracht wird, dass es entweder beim Aufbringen oder spätestens beim Verbinden der Substrate in der Verbindungseinrichtung eine geschlossene Geometrie bildet, welche die Teilflächen der Flächenseite unter Ausbildung von innenliegenden Bereichen umschließt.

Von dem Verbindungsmittel umschlossene Teilflächen können erhalten werden, indem das Verbindungsmittel in Form von Strängen auf die erste Flächenseite des ersten Substrates aufgetragen wird und die Stränge derart ausgebildet werden, dass jeder Strang eine Teilfläche der ersten Flächenseite des ersten Substrates umgrenzt. Auf die von Verbindungsmittel umschlossene Teilfläche kann zumindest ein weiteres Verbindungsmittel und/oder zumindest ein Hilfsmittel aufgebracht werden. Das Hilfsmittel kann aus der Gruppe ausgewählt sein, die mechanische Elemente, optische Elemente, elektronische Komponenten, optoelektronische Komponenten, chemische Stoffe und Stoffgemische in gasförmiger, flüssiger oder fester Form sowie Kombinationen davon umfasst. Auf diese Weise kann die Vorrichtung zum Aufbau komplexer Substratverbünde genutzt werden. Bei den mechanischen Elementen kann es sich um einen Abstandshalter, der auch als Spacer bezeichnet wird, handeln. Bei den optischen Elementen kann es sich um optische Filter, beispielsweise aktive optische Filter, handeln. Bei elektronischen und optoelektronischen Elementen kann es sich beispielsweise um Solarzellen, Leuchtmittel, Sensoren, Aktoren usw. handeln. Die Teilflächen werden im Folgenden auch als Teilbereiche bezeichnet.

Das Verbindungsmittel kann in Form von Strängen aufgetragen werden, wenn es einen Teilbereich der Flächenseite des Substrates umschließen soll. Alternativ kann das Verbindungselement aber auch Teilbereiche der Flächenseite des Substrates vollständig bedecken. Auf diese vollständig von Verbindungsmittel bedeckten Teilbereiche können sogenannte Zwischenlagen, die auch als Inlay bezeichnet werden, aufgebracht werden. Sollen diese Zwischenlagen vollständig in Verbindungsmittel eingeschlossen werden, so wird anschließend auf die Zwischenlage weiteres Verbindungsmittel aufgetragen, das schließlich in der Verbindungseinrichtung mit einem weiteren Substrat abgedeckt wird. Die Zwischenlagen sind keine bandförmigen Substrate. Sie haben vorzugsweise eine geringere Breite als die beiden Substrate, zwischen denen sie angeordnet wird, so dass die beiden Substrate auch an ihren Längsrändern über die Zwischenlage überstehen. Die Zwischenlage kann aus der Gruppe ausgewählt sein, die ein mechanisches Element, ein optisches Element, eine elektronische Komponente oder eine optoelektronische Komponente umfasst. Bei den optischen Elementen kann es sich um einen optischen Filter, beispielsweise aktive optische Filter, handeln. Bei elektronischen und optoelektronischen Elementen kann es sich beispielsweise um Solarzellen, Leuchtmittel, Sensoren, Aktoren usw. handeln. Bei den mechanischen Elementen kann es sich um einen Abstandshalter, der auch als Spacer bezeichnet wird, oder um eine Stützstruktur, insbesondere um eine Stützstruktur aus Kunststoff handeln. Vorteilhafterweise umgibt die Stützstruktur in Form eines Rahmens den vollständig von Verbindungsmittel bedeckten Teilbereich, auf den die Zwischenlage aufgebracht ist. Abschnitte der Stützstruktur können an den Längsrändern der Substrate verlaufen, zwischen denen die Stützstruktur angeordnet ist. Mittels einer solchen Stützstruktur können die - unter Umständen - empfindlichen Ränder des Substratverbundes oder die Ränder von Zuschnitten aus dem Substratverbund vor Beschädigung, insbesondere bei der Weiterverarbeitung geschützt werden. Die Rahmen können bei der Aufbringung auf ein Substrat bündig an den Rändern der Substrate abschließen oder über die Ränder überstehen. Wird der Substratverbund später getrennt, stellen die Rahmen die äußere Begrenzung der Zuschnitte dar, wobei die Abdichtung zum Innenraum zwischen benachbarten Substraten in dem Zuschnitt hin das Verbindungsmittel übernimmt. Dabei schützt das Verbindungsmittel die innenliegende Zwischenlage zuverlässig vor den Umgebungseinflüssen.

Derartige Rahmen können alternativ in Form eines bandförmigen Substrates bereitgestellt werden. Dazu soll ein solches bandförmiges Substrat in dem herzustellenden Substratverbund zwischen zwei benachbarten bandförmigen Substraten liegen. Die so bereitgestellten Rahmen bilden, wie im Zusammenhang mit den Zwischenlagen beschrieben, eine Stützstruktur aus.

Der mittels der erfindungsgemäßen Vorrichtung hergestellte Substratverbund kann fest, flexibel oder biegsam, d. h. semi-rigid sein. Wird der Substratverbund mittels der Trenneinrichtung in Zuschnitte zerlegt, so können die Trennungsschnitte beliebig vorgenommen werden. Es ist jedoch bevorzugt, dass die Trennungsschnitte der Geometrie der Verbindungsmittel - oder, falls Rahmen vorgesehen sind, der Geometrie der Rahmen - derart folgen, dass jeder Zuschnitt eine von dem Verbindungsmittel umschlossene Teilfläche aufweist. Die Trennungsschnitte werden dabei vorzugsweise entlang der äußeren Kontur des eine Teilfläche umschließenden Verbindungsmittels bzw. der Rahmen vorgenommen.

Die Zuschnitte, die aus dem Substratverbund gewonnen werden, können eine beliebige Kontur haben. Auch innerhalb einer geschlossenen Kontur können weitere Konturen oder Durchbrüche eingebracht sein, was allerdings voraussetzt, dass auch die innenliegenden Konturen vor der Herstellung des Substratverbundes mit einem Verbindungsmittel abgedichtet worden sind.

Es kann vorgesehen sein, dass zumindest eines der Substrate einer Bearbeitung, beispielsweise einer Oberflächenbearbeitung, mittels einer Bearbeitungseinrichtung unterzogen wird, bevor es zu der Verbindungseinrichtung geführt wird. Die Bearbeitung kann die Aufbringung einer Strukturierung, die Aufbringung einer Beschichtung, insbesondere einer funktionellen Beschichtung, ober beides umfassen. Die Bearbeitungseinrichtung sollte so angeordnet sein, dass das Verbindungsmittel - sofern es nicht bereits, wie oben beschrieben, als Schicht in der Bearbeitungseinrichtung auf das Substrat aufgebracht wird - erst nach einer Bearbeitung des Substrates aufgetragen wird. Vorzugsweise wird die Flächenseite eines Substrates einer Bearbeitung unterzogen, die bei der Herstellung des Substratverbundes einer Flächenseite eines anderen Substrates zugewandt ist. Das kann die Flächenseite sein, auf die Verbindungsmittel aufgetragen wird.

Die Bearbeitungseinrichtung kann in einer Bearbeitungskammer angeordnet sein, in der von der Umgebung abweichende physikalische und/oder chemische Bedingungen eingestellt werden können, was aber nicht zwingend erforderlich ist. In der Bearbeitungskammer können auch Umgebungsbedingungen herrschen. Sollen in der Bearbeitungskammer von der Umgebung abweichende Bedingungen herrschen, so besitzt die Bearbeitungskammer vorzugsweise abgedichtete Durchführungen zum Einbringen des Substrates in die Bearbeitungskammer und eine abgedichtete Durchführung zum Abführen des Substrates aus der Bearbeitungskammer. Bei den Durchführungen kann es sich um Rollenventile handeln, wobei die Rollen nur eine der Flächenseiten des Substrates kontaktieren, nicht aber dessen andere Flächenseite. Vorzugsweise gelangt nur die Flächenseite des Substrates in Kontakt mit den Rollen der Rollenventile, die keiner Bearbeitung unterzogen wird. Das Aufbringen einer Beschichtung oder Strukturierung ermöglicht es, ein funktionierendes Element mit bestimmten Eigenschaften auf einem Substrat zu bilden, das dann in der Verbindungseinrichtung mit einem anderen Substrat versiegelt wird.

Die Bearbeitungskammer und die Verbindungskammer können aneinander angrenzen. Vorteilhafterweise sind beide Kammern in einem gemeinsamen Gehäuse untergebracht, wobei die Bearbeitungskammer und die Verbindungskammer durch eine Trennwand voneinander getrennt sind. In der Trennwand ist eine Durchführung ausgebildet, die den Austritt eines Substrates aus der Bearbeitungskammer in die Verbindungskammer ermöglicht. Bei dieser Durchführung kann es sich um eine der Durchführungen handeln, die erfindungsgemäß in der Verbindungskammer ausgebildet sein sollen. Vorzugsweise handelt es sich bei der Durchführung um ein Rollventil, das oben im Zusammenhang mit den Durchführungen in der Verbindungskammer beschrieben worden ist. Die Trennwand ist Teil der Verbindungskammer und ebenso Teil der Bearbeitungskammer. Die Trennwand und die darin ausgebildete Durchführung sorgen in den beiden Kammern für physikalische und/oder chemische Bedingungen, die unabhängig voneinander sind. Damit wird insbesondere drucktechnische, chemische, thermische Trennung zwischen den Kammern erreicht. In der Bearbeitungskammer können Bearbeitungseinrichtungen für einen oder mehrere Bearbeitungsprozesse angeordnet sein, ohne dass Einschränkungen bestehen. Flansche ermöglichen den Zugang zu der Bearbeitungskammer insbesondere zur Wartung, Justage und Kontrolle von Einrichtungen, die sich in der Bearbeitungskammer befinden. Die sofortige Überführung eines Substrates aus der Bearbeitungskammer in die Verbindungskammer, in der das bearbeitete Substrat mit zumindest einem anderen Substrat zu einem Substratverbund verbunden wird, bietet den Vorteil, dass die teilweise äußerst empfindlichen Ergebnisse der in der Prozess-Sektion durchgeführten Bearbeitungsprozesse sofort - d. h. insbesondere ohne mechanische Einflüsse, beispielsweise durch eine Rollenberührung, ohne optische Einflüsse, beispielsweise durch Umgebungslicht, ohne chemische Einflüsse, beispielsweise der Umgebung, oder Kombinationen dieser Einflüsse - hermetisch versiegelt werden, so dass sie von den Einflüssen der Atmosphäre sicher und dauerhaft abgeschirmt sind.

Die erfindungsgemäße Vorrichtung ist insbesondere zur Ausführung des nachstehend beschriebenen Verfahrens geeignet.

Nach Maßgabe der Erfindung ist ferner ein Verfahren zum Herstellen eines Substratverbundes, der zumindest ein erstes bandförmiges Substrat und ein zweites bandförmiges Substrat umfasst, in einer von der Umgebung abgeschlossenen Verbindungskammer, in der von der Umgebung abweichende physikalische und/oder chemische Bedingungen herrschen, vorgesehen. Das Verfahren umfasst zumindest die Schritte:
- kontinuierliches Führen der Substrate unter Auftragung eines Verbindungsmittels auf eine erste Flächenseite des ersten Substrates in die Verbindungskammer, so dass in der Verbindungskammer eine erste Flächenseite des zweiten Substrates der ersten Flächenseite des ersten Substrates zugewandt ist; und
- Herstellen des Substratverbundes zwischen den zumindest zwei bandförmigen Substraten in der Verbindungskammer
wobei die Substrate unter Erhalt des Substratverbundes durch einen Spalt geführt werden, der zwischen zumindest einem Paar von gegenüberliegenden Rollen einer Verbindungseinrichtung ausgebildet ist, so dass das Verbindungsmittel, das sich auf der ersten Flächenseite des ersten Substrates befindet, in Kontakt mit der ersten Flächenseite des zweiten Substrates gelangt, und wobei die Rollen ein Zusammenlegen der Substrate in dem Spalt auf eine substratschonende Weise bewirken, ohne dass die Rollen der Verbindungseinrichtung Druck auf die Substrate ausüben, und wobei der Substratverbund im Anschluss an die Verbindungseinrichtung eine Kalibrierungseinrichtung zum Kalibrieren der Stärke des Substratverbundes durchläuft.

Das Verbindungsmittel wird vorzugsweise in Form von Strängen auf die erste Flächenseite des ersten Substrates aufgetragen. Dabei sollten die Stränge derart ausgebildet werden, dass jeder Strang eine Teilfläche der ersten Flächenseite des ersten Substrates umschließt. Weiterhin kann vorgesehen sein, dass auf von einem Strang umschlossene Teilflächen zumindest ein weiteres Verbindungsmittel und/oder zumindest ein Hilfsmittel aufgebracht wird, wobei das Hilfsmittel aus der Gruppe ausgewählt wird, die mechanische Elemente, optische Elemente, elektronische Komponenten, optoelektronischer Komponenten, chemische Stoffe und Stoffgemische in gasförmiger, flüssiger oder fester Form sowie Kombinationen davon umfasst. Nach der Herstellung des Substratverbundes kann der Substratverbund aus der Verbindungskammer geführt und anschließend als Band bereitgestellt oder zugeschnitten werden.

Weitere Merkmale des erfindungsgemäßen Verfahrens sind vorstehend im Zusammenhang mit der erfindungsgemäßen Vorrichtung beschrieben worden. Es wird daher auf die dortigen Ausführungen verwiesen.

Die Vorrichtung und das Verfahren der Erfindung ermöglichen eine kontinuierliche Verarbeitung von bandförmigen Substraten, die auf einer Rolle oder als mäanderförmiger Stapel bereitgestellt werden. Damit wird eine hochproduktive Auslegung des Verfahrens zur Herstellung einfacher und komplexer Substratverbünde ermöglicht. Das erfindungsgemäße Verfahren ist im Vergleich zur Verarbeitung von Substratstücken (Sheets) energetisch sparsam, da die Verbindungssektion, d. h. die Verbindungskammer, ständig unter Prozessbedingungen und damit im gleichen Energiezustand gehalten werden kann. Es ist wesentlich günstiger, Substrate einzusetzen, die in Form von Coils angeliefert werden, als Substrate, die als einzelne Sheets vorliegen.

Die erfindungsgemäße Vorrichtung ist so ausgebildet, dass die Substrate jeweils nur an einer ihrer Flächenseiten mit Einrichtungen der Vorrichtung in Kontakt kommen, während die anderen Flächenseiten der Substrate nicht von derartigen Einrichtungen berührt werden. Dies kann als Einseitenberührung bezeichnet werden. Das ist äußerst vorteilhaft für sensible Substrate und insbesondere für Schichten, die sich auf diesen Substraten befinden und die noch empfindlicher als die Substratoberflächen selbst sein können. Aber auch insgesamt ist die mechanische Belastung für die Substrate in der erfindungsgemäßen Vorrichtung äußerst gering. Für besonders sensible Substrate kann überdies ein Trägerband als Führungseinrichtung eingesetzt werden.

Besonders vorteilhaft ist, dass die Art und Weise sowie die Geometrie der Aufbringung und Verteilung des Verbindungsmittels vollkommen frei wählbar ist. Das gilt ebenso für eine nachfolgende Trennung des hergestellten Substratverbundes in Zuschnitte. Die Trennung kann ebenfalls in Zuschnitte mit beliebiger Geometrie erfolgen.

Das Aufbringen von Schutzfolien auf eine Flächenseite der Substrate schützt die Oberfläche des Substrates an dieser Flächenseite in der erfindungsgemäßen Vorrichtung. Die Schutzfolie kann ebenfalls bei der Weiterverarbeitung des hergestellten Substratverbundes von Nutzen sein.

Ein besonderer Vorteil der Vorrichtung und des Verfahrens der vorliegenden Erfindung liegt in der Verbindung der Substrate unter physikalischen und/oder chemischen Bedingungen, die sich von denen der Umgebung unterscheiden. In der Verbindungskammer kann zum Beispiel eine Inertgasatmosphäre, beispielsweise eine Stickstoffatmosphäre, oder Vakuum geschaffen werden. Damit können die für viele Anwendungen schädlichen Stoffe der Umgebung, wie beispielsweise Sauerstoff und Feuchtigkeit, auf ein extrem geringes, zumindest aber auf ein für die geplante Anwendung vertretbares Maß reduziert werden. Ein weiterer Vorteil besteht darin, dass die für die Herstellung von Substratverbünden nachteilige Belastung mit Partikeln, die beim Betrieb der erfindungsgemäßen Vorrichtung entstehen, gering ist, insbesondere weil die Einrichtungen der erfindungsgemäßen Vorrichtung jeweils nur eine Flächenseite eines Substrates berühren, angetriebene Führungseinrichtungen sowie weitere angetriebene Einrichtungen vorgesehen sind und der Substratverbund in einem abgeschlossenen Raum, dem Innenraum der Verbindungskammer, hergestellt wird. Damit wird die Fehlerquote bei der Produktion erheblich gesenkt. Da der Substratverbund nicht außerhalb, sondern innerhalb der Verbindungskammer hergestellt und erst anschließend wieder an die umgebende Atmosphäre befördert wird - d. h. die Substrate werden unter abgeschlossener Atmosphäre gefügt - herrschen im Inneren des Substratverbundes die physikalischen und chemischen Bedingungen der Verbindungskammer und nicht die der umgebenden Atmosphäre. Damit kann beispielsweise verhindert werden, dass sich auch kleinste Einschlüsse von Feuchtigkeit innerhalb des Substratverbundes befinden, was z. B. für organische Elektronik von entscheidender Bedeutung ist.

Die erfindungsgemaß vorgesehene Kalibrierfunktion, die mittels der Kalibrierungseinrichtung realisiert wird, ermöglicht eine präzise und wiederholgenaue Produktion. Die Verwendung der Rollenventile, wie sie in der unveröffentlichten deutschen Patentanmeldung Nr. 10 2014 105 747.3 des Anmelders beschrieben werden, ermöglicht einen schonenden Substrattransport von der Umgebung in den abgeschlossenen Raum der Verbindungskammer und nach der Herstellung des Substratverbundes wieder zurück in die Umgebung.

Die erfindungsgemäße Vorrichtung und das erfindungsgemäße Verfahren ermöglichen eine hochproduktive und kostengünstige Herstellung von flächigen Substratverbünden in einer kontinuierlichen und energetisch günstigen Weise.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische Darstellung einer ersten Ausführungsform einer erfindungsgemäßen Vorrichtung;
- Fig. 2: eine schematische Darstellung einer zweiten Ausführungsform einer erfindungsgemäßen Vorrichtung;
- Fig. 3: eine schematische Darstellung der ersten Ausführungsform der erfindungsgemäßen Vorrichtung mit geöffneter Verbindungskammer;
- Fig. 4: eine schematische Darstellung einer dritten Ausführungsform einer erfindungsgemäßen Vorrichtung;
- Fig. 5: eine schematische Darstellung einer vierten Ausführungsform einer erfindungsgemäßen Vorrichtung;
- Fig. 6: eine schematische Darstellung einer fünften Ausführungsform einer erfindungsgemäßen Vorrichtung;
- Fig. 7: eine schematische Darstellung einer sechsten Ausführungsform einer erfindungsgemäßen Vorrichtung;
- Fig. 8: eine schematische Darstellung einer siebenten Ausführungsform einer erfindungsgemäßen Vorrichtung;
- Fig. 9: eine schematische Darstellung einer achten Ausführungsform einer erfindungsgemäßen Vorrichtung;
- Fig. 10: eine schematische Darstellung einer neunten Ausführungsform einer erfindungsgemäßen Vorrichtung;
- Fig. 11: eine schematische Darstellung einer zehnten Ausführungsform einer erfindungsgemäßen Vorrichtung;
- Fig. 12: eine Schnittdarstellung durch einen ersten Substratverbund;
- Fig. 13: eine Schnittdarstellung durch einen zweiten Substratverbund;
- Fig. 14: eine Schnittdarstellung durch einen dritten Substratverbund;
- Fig. 15: eine schematische Detaildarstellung der in Fig. 1 gezeigten ersten Ausführungsform;
- Fig. 16: eine schematische Detaildarstellung der in Fig. 2 gezeigten zweiten Ausführungsform;
- Fig. 17: eine schematische Draufsicht auf einen vierten Substratverbund;
- Fig. 18: eine schematische Draufsicht auf einen fünften Substratverbund;
- Fig. 19: eine schematische Draufsicht auf einen sechsten Substratverbund;
- Fig. 20: eine schematische Draufsicht auf einen siebenten Substratverbund;
- Fig. 21: eine schematische Darstellung eines achten Substratverbundes (Fig. 21a: Schnittdarstellung; Fig. 21b: Draufsicht);
- Fig. 22: eine schematische Darstellung eines neunten Substratverbundes (Fig. 22a: Schnittdarstellung entlang Schnittlinie A-A von Fig. 22b; Fig. 22b: Draufsicht);
- Fig. 23: eine schematische Darstellung eines zehnten Substratverbundes (Fig. 23a: Schnittdarstellung entlang Schnittlinie A-A von Fig. 23b; Fig. 23b: Draufsicht);
- Fig. 24: eine schematische Darstellung eines elften Substratverbundes und eines daraus erhaltenen Bauelementes (Fig. 24a: Schnitt durch den Substratverbund quer zu dessen Laufrichtung, Fig. 24b: Draufsicht auf ein Bauelement);
- Fig. 25: eine schematische Darstellung eines zwölften Substratverbundes (Fig. 25a: Schnitt entlang Schnittlinie A-A von Fig. 25b; Fig. 25b: Draufsicht); und
- Fig. 26: eine schematische Darstellung eines bandförmigen Substrat, das in einem Substratverbund zwischen anderen Substraten liegen soll (Fig. 26a: Draufsicht; Fig. 26b: weitere Draufsicht).

In den Zeichnungen haben gleiche Bezugszeichen dieselbe Bedeutung, sofern nichts anderes angegeben ist. Sind in den Zeichnungen Koordinaten angegeben, so kennzeichnet die z-Achse die Normale zur Bodenebene, während die x- und y-Achse in der Bodeneben verlaufen. Die Substratbahnen laufen in den Zeichnungen im Wesentlichen horizontal zur Bodenebene. Sie können aber auch vertikal zur Bodenebene laufen. Auch Kombinationen davon sind möglich.

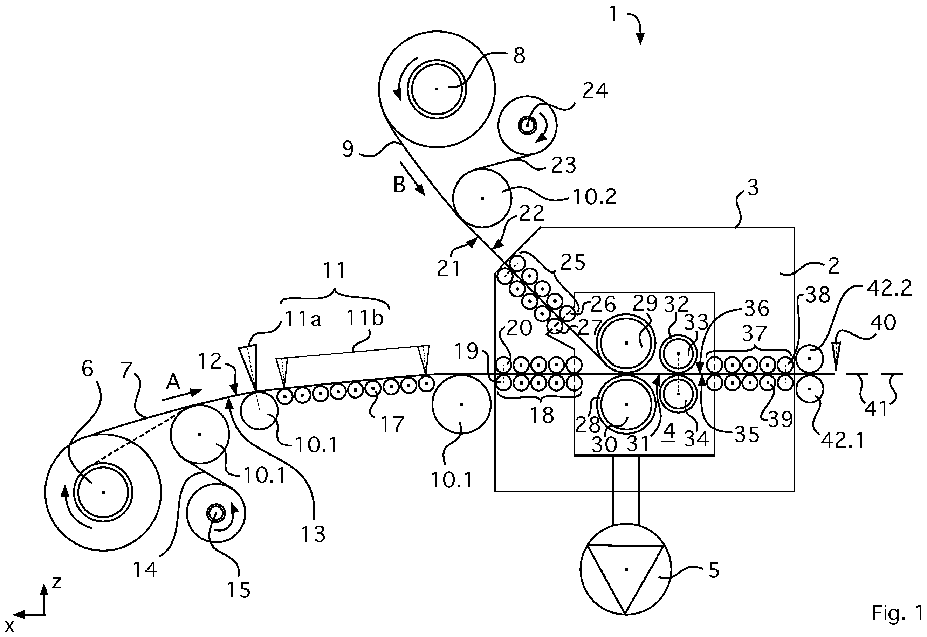

Die in Fig. 1 gezeigte erste Ausführungsform der erfindungsgemäßen Vorrichtung 1 zum Verbinden von bandförmigen Substraten weist eine Verbindungskammer 2 mit einer Wandung 3 auf, die einen Innenraum 4 umgibt. Der Innenraum 4 der Verbindungskammer steht mit einer Pumpe 5 in Verbindung. Mit Hilfe der Pumpe 5, bei der es sich um eine Vakuumpumpe handeln kann, können physikalische und/oder chemische Bedingungen in der Verbindungskammer eingestellt werden, die sich von denen, die außerhalb der Verbindungskammer 2 herrschen, unterscheiden.

Die erfindungsgemäße Vorrichtung 1 umfasst einen ersten Abwickler 6 für das erste bandförmige Substrat 7 und einen zweiten Abwickler 8 für das zweite bandförmige Substrat 9. Beide Substrate 7, 9 werden als Coil bereitgestellt.

Das erste Substrat 7 wird mittels ersten Führungsrollen 10.1 in Pfeilrichtung A von dem ersten Abwickler 6 in die Verbindungskammer 2 geführt. Die ersten Führungsrollen 10.1 sind außerhalb der Verbindungskammer 2 angeordnet. Den ersten Führungsrollen 10.1 ist dabei nur eine der Flächenseiten des ersten Substrates, nämlich seine zweite Flächenseite 13, zugewandt. Die andere, d. h. erste Flächenseite 12 des ersten Substrates 7 ist den ersten Führungsrollen 10.1 abgewandt. Die ersten Führungsrollen 10.1 sind angetriebene Rollen. Die ersten Führungsrollen 10.1 bewirken als angetriebene Umlenkrollen den Transport des ersten Substrates 7.

In der in Fig. 1 gezeigten Ausführungsform stehen die ersten Führungsrollen 10.1 nicht in direktem Kontakt mit der zweiten Flächenseite 13 des ersten Substrates 7. Nach dem Abwickeln des ersten Substrates 7 vom ersten Abwickler 6 wird auf die zweite Flächenseite 13 des ersten Substrates 7 eine Schutzfolie 14 aufgebracht. Die Schutzfolie 14 wird als Coil bereitgestellt und von einem Abwickler 15 abgewickelt. Die Schutzfolie 14 bedeckt die zweite Flächenseite 13 des ersten Substrates 7 über dessen gesamte Breite. Die ersten Führungsrollen 10.1 stehen in Kontakt mit der auf die zweite Flächenseite 13 aufgebrachten Schutzfolie 14.

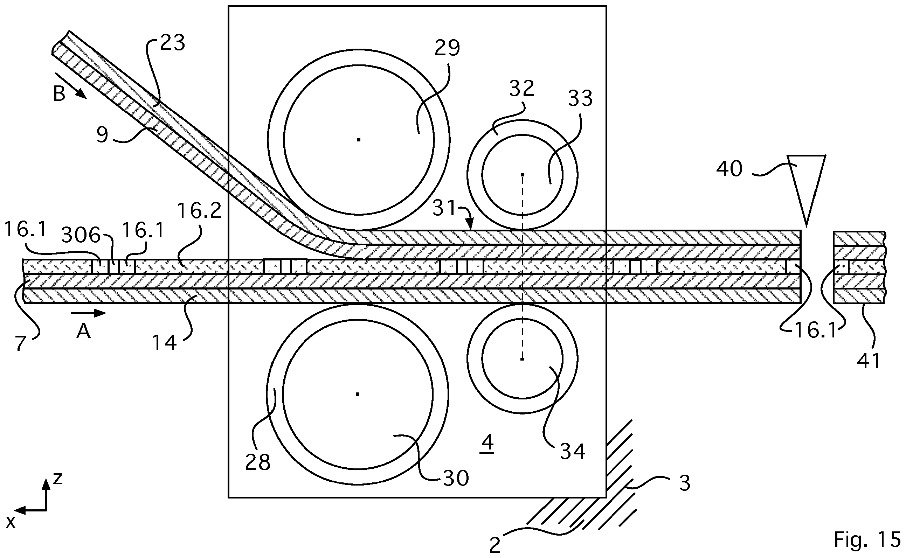

Nach dem Aufbringen der Schutzfolie 14 gelangt das erste Substrat 7 zu einer Auftragungseinrichtung 11. Dort wird ein erstes Verbindungsmittel 16 (siehe Fig. 15) auf die erste Flächenseite 12 des ersten Substrates 7 aufgebracht. Dabei wird das erste Substrat 7 an seiner zweiten Flächenseite 13 mittels Stützrollen 17, die wahlweise angetrieben sein können, abgestützt. Die Auftragung des ersten Verbindungsmittels 16 mittels der Auftragungseinrichtung 11 kann, wie in Fig. 1 gezeigt, über eine gewisse Wegstrecke des Bahnlaufes des ersten Substrates 7 erfolgen. Dazu kann die Auftragungseinrichtung eine erste Auftragungseinheit 11a und eine zweite Auftragungseinheit 11b umfassen, die in Bezug auf die Laufrichtung des ersten Substrates 7 nach der ersten Auftragungseinheit 11a angeordnet ist.

Das mit einer Schutzfolie 14 versehene und mit Verbindungsmittel 16 beschichtete erste Substrat 7 wird anschließend über eine erste abgedichtete Durchführung 18 in den Innenraum 4 der Verbindungskammer 2 geführt. Die erste Durchführung 18 weist mehrere Paare von Rollen 19, 20 auf. Zwischen der ersten Reihe von Rollen 19 und der zweiten Reihe von Rollen 20 ist ein Spalt ausgebildet, durch den das erste Substrat 7 in die Verbindungskammer 2 gelangt. Dabei liegt das erste Substrat 7 nur mit der Schutzfolie 14, die sich auf seiner zweiten Flächenseite 13 befindet, auf Rollen, und zwar den Rollen 19, auf. Die erste Flächenseite 12 des ersten Substrates 7 gelangt nicht in Kontakt mit den Rollen 20. Eine oder mehrere der Rollen 19, 20 können temperiert sein.

Das zweite Substrat 9 wird mittels einer ersten Führungsrolle 10.2 in Pfeilrichtung B von dem zweiten Abwickler 8 in die Verbindungskammer 2 geführt. Die erste Führungsrolle 10.2 ist außerhalb der Verbindungskammer 2 angeordnet. Der ersten Führungsrolle 10.2 ist dabei nur eine der Flächenseiten des zweiten Substrates 9, nämlich seine zweite Flächenseite 22, zugewandt. Die andere, d. h. erste Flächenseite 21 des zweiten Substrates 9 ist der ersten Führungsrolle 10.2 abgewandt. Die erste Führungsrolle 10.2 ist eine angetriebene Rolle. Die erste Führungsrolle 10.2 bewirkt als angetriebene Umlenkrolle den Transport des zweiten Substrates 9.

In der in Fig. 1 gezeigten Ausführungsform steht die erste Führungsrolle 10.2 nicht in direktem Kontakt mit der zweiten Flächenseite 22 des zweiten Substrates 9. Nach dem Abwickeln des zweiten Substrates 9 vom zweiten Abwickler 8 wird auf die zweite Flächenseite 22 des zweiten Substrates 9 eine Schutzfolie 23 aufgebracht. Die Schutzfolie 23 wird als Coil bereitgestellt und von einem Abwickler 24 abgewickelt. Die Schutzfolie 23 bedeckt die zweite Flächenseite 22 des zweiten Substrates 9 über dessen gesamte Breite. Die erste Führungsrolle 10.2 steht in Kontakt mit der auf die zweite Flächenseite 22 aufgebrachten Schutzfolie 23. Auf das zweite Substrat 9 wird kein Verbindungsmittel aufgebracht.

Nach dem Aufbringen der Schutzfolie 23 gelangt das zweite Substrat 9 über eine zweite abgedichtete Durchführung 25 in den Innenraum 4 der Verbindungskammer 2. Die zweite Durchführung 25 weist mehrere Paare von Rollen 26, 27 auf. Zwischen der ersten Reihe von Rollen 26 und der zweiten Reihe von Rollen 27 ist ein Spalt ausgebildet, durch den das zweite Substrat 9 in die Verbindungskammer 2 gelangt. Dabei liegt das zweite Substrat 9 nur mit der Schutzfolie 23, die sich auf seiner zweiten Flächenseite 22 befindet, auf Rollen, und zwar den Rollen 26, auf. Die erste Flächenseite 21 des zweiten Substrates 9 gelangt nicht in Kontakt mit den Rollen 27. Eine oder mehrere der Rollen 26, 27 können temperiert sein.

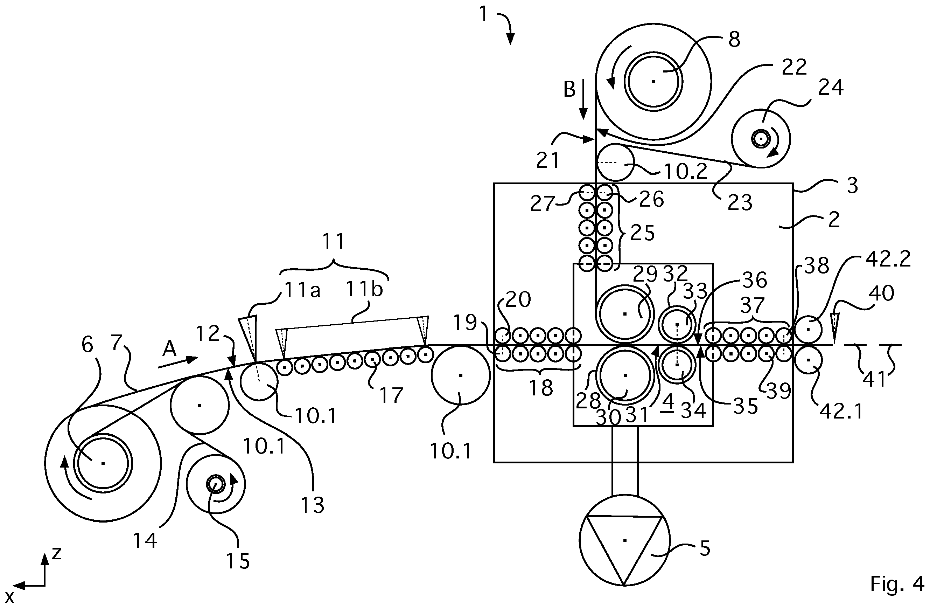

Die erste Durchführung 18 und die zweite Durchführung 25 sind beabstandet voneinander in der Wandung 3 der Verbindungskammer 2 ausgebildet. Dabei können die Durchführungen 18, 25, wie in Fig. 1 gezeigt, von einer Seite in die Verbindungskammer 2 oder an verschiedenen Seiten in die Verbindungskammer 2 (Fig. 4) geführt werden. Abgesehen davon entspricht die in Fig. 4 gezeigte dritte Ausführungsform der ersten Ausführungsform.

Im Innenraum 4 der Verbindungskammer 2 ist die Verbindungseinrichtung 28 angeordnet, die zwei gegenüberliegende Rollen 29, 30 aufweist, zwischen denen ein Spalt ausgebildet ist. Durch diesen Spalt werden das erste Substrat 7 und das zweite Substrat 9 derart geführt, dass die erste Flächenseite 12 des ersten Substrates 7 der ersten Flächenseite 21 des zweiten Substrates 9 gegenüberliegt. In dem Spalt kommt die erste Flächenseite 21 des zweiten Substrates 9 in Kontakt mit dem Verbindungsmittel 16, das auf die erste Flächenseite 12 des ersten Substrates 7 aufgebracht ist. Das Verbindungsmittel 16 bewirkt dabei die Herstellung einer Verbindung zwischen den beiden Substraten 7, 9 unter Erhalt eines Substratverbundes 31. Eine oder beide Rollen 29, 30 der Verbindungseinrichtung 28 können temperiert sein. Die Rollen 29, 30 können angetrieben sein und so den Transport der Substrate 7, 9 und des Substratverbundes 31 bewirken oder zumindest unterstützen. Nur die mit Schutzfolien 14, 23 versehenen zweiten Flächenseiten 13, 22 der Substrate 7, 9 gelangen in Kontakt mit den Rollen 29, 30 der Verbindungseinrichtung 28.

Der in der Verbindungseinrichtung 28 erhaltene Substratverbund 31 gelangt anschließend zu einer Kalibrierungseinrichtung 32, die zwei gegenüberliegende Rollen 33, 34 aufweist, zwischen denen ein Spalt ausgebildet ist. Durch diesen Spalt wird der Substratverbund 31 geführt. Mittels der Kalibrierungseinrichtung 32 wird die Stärke des Substratverbundes 31 auf ein definiertes Maß gebracht. Eine oder beide Rollen 33, 34 der Kalibrierungseinrichtung 32 können temperiert sein. Die Rollen 33, 34 sind nicht-angetriebene Rollen. Nur die mit Schutzfolien 14, 23 versehenen zweiten Flächenseiten 13, 22 der Substrate 7, 9, die nun die Außenseiten 35, 36 des Substratverbundes 31 bilden, gelangen in Kontakt mit den Rollen 33, 34 der Kalibrierungseinrichtung 32.

Der auf Maß gebrachte Substratverbund 31 wird nun durch eine dritte abgedichtete Durchführung 37 aus dem Innenraum 4 der Verbindungskammer 2 geführt. Die dritte Durchführung 37 weist mehrere Paare von Rollen 38, 39 auf. Zwischen der ersten Reihe von Rollen 38 und der zweiten Reihe von Rollen 39 ist ein Spalt ausgebildet, durch den der Substratverbund 31 aus der Verbindungskammer 2 geführt wird. Dabei liegt der Substratverbund 31 nur mit der Schutzfolie 14, die sich an seiner ersten Außenseite 35 befindet, auf Rollen, und zwar den Rollen 39, auf. Die zweite Außenseite 36 gelangt nicht in Kontakt mit den Rollen 38. Eine oder mehrere der Rollen 38, 39 können temperiert sein.

Von der Verbindungskammer 2 gelangt der Substratverbund 31 dann zu einer Trenneinrichtung 40, mit der der Substratverbund 31 in Zuschnitte 41 zerlegt wird. Zum Transport des Substratverbundes 31 aus dem Innenraum 4 der Verbindungskammer 2 kann ein Paar zweiter, angetriebener Führungsrollen 42.1, 42.2 vorgesehen sein, die in Kontakt mit den Schutzfolien 14, 23, die sich an den beiden Außenseiten 35, 36 befinden, stehen. Die zweiten Führungsrollen 42 bewirken den Transport des Substratverbundes 31 und unterstützen den Transport der Substrate 7, 9. An die Trenneinrichtung 40 können sich Einrichtungen zur Vereinzelung und/oder weiteren Segmentierung der Zuschnitte 41 anschließen.

Der Verbindungsprozess ist in Fig. 15 weiter veranschaulicht, in der der Verbindungsvorgang in der Verbindungskammer 2 vereinfacht gezeigt ist. Führungseinrichtungen und Durchführungen sind zur Vereinfachung der Darstellung in Fig. 15 nicht gezeigt. Es ist dort insbesondere zu erkennen, dass Verbindungsmittel 16.1 und 16.2 in einem regelmäßigen Muster auf das erste Substrat 7 aufgetragen worden sind. Dabei ist das Verbindungsmittel 16.2 jeweils zwischen einem umlaufenden Strang aus Verbindungsmittel 16.1 angeordnet. Zwischen zwei umlaufenden Stegen 16.1 ist jeweils ein Spalt 306 ausgebildet, der sich über die gesamte Breite des ersten Substrates 7 erstreckt. An diesen Spalten 306 wird der Substratverbund 31 mittels der Trenneinrichtung 40 in Zuschnitte 41 getrennt. Verbindungsmittel 16.1 und Verbindungsmittel 16.2 können aus dem gleichen oder unterschiedlichen Materialien bestehen. Die Stege aus Verbindungsmittel 16.1 sind Teil eines umlaufenden Stranges, der einen Teilbereich der Oberfläche des ersten Substrates 7 umschließt. An den Spalten 306 kann die Trennung des Substratverbundes 401 in Zuschnitte 41 vorgenommen werden, ohne die von Verbindungsmittel umgebenen Teilbereiche zu beschädigen, d.h. ohne die umlaufenden Stränge zu öffnen.

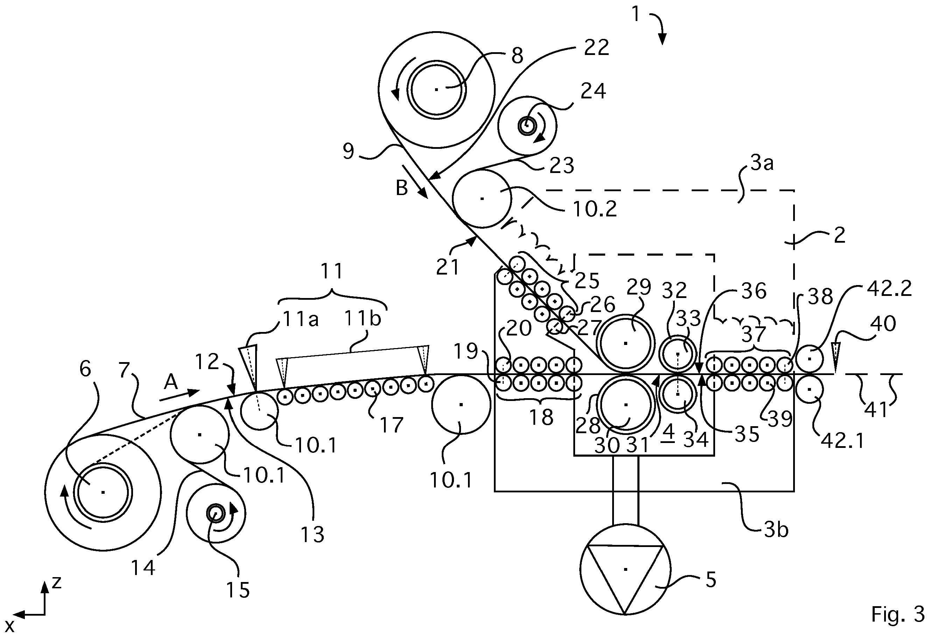

In Fig. 3 ist zu erkennen, dass die Verbindungskammer 2 geöffnet werden kann. Dazu kann ein Segment 3a der Wandung 3, die aus den Segmenten 3a, 3b besteht, entfernt werden, was einen einfachen und schnellen Zugang, insbesondere für Servicearbeiten, zum Innenraum 4 ermöglicht.

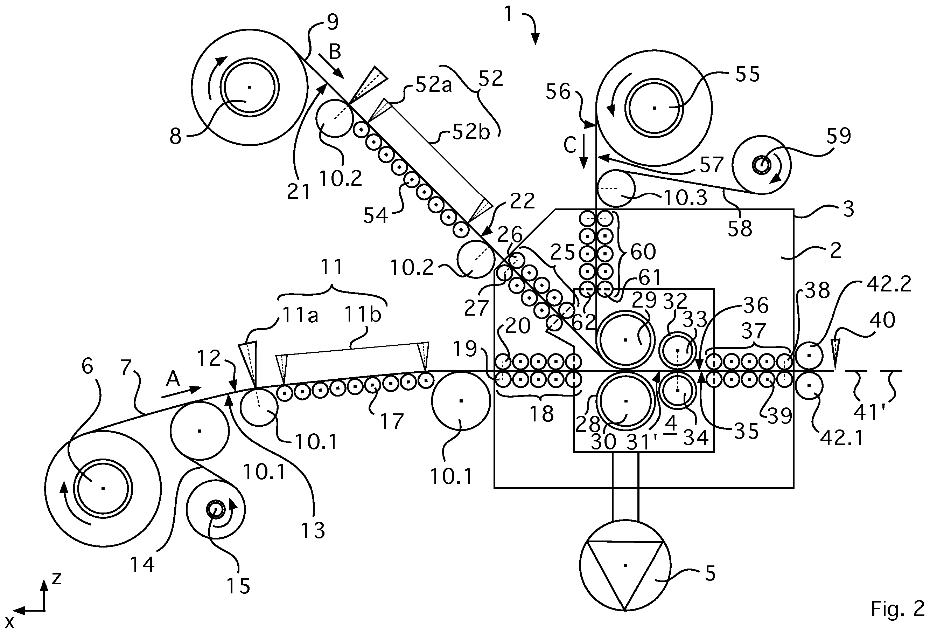

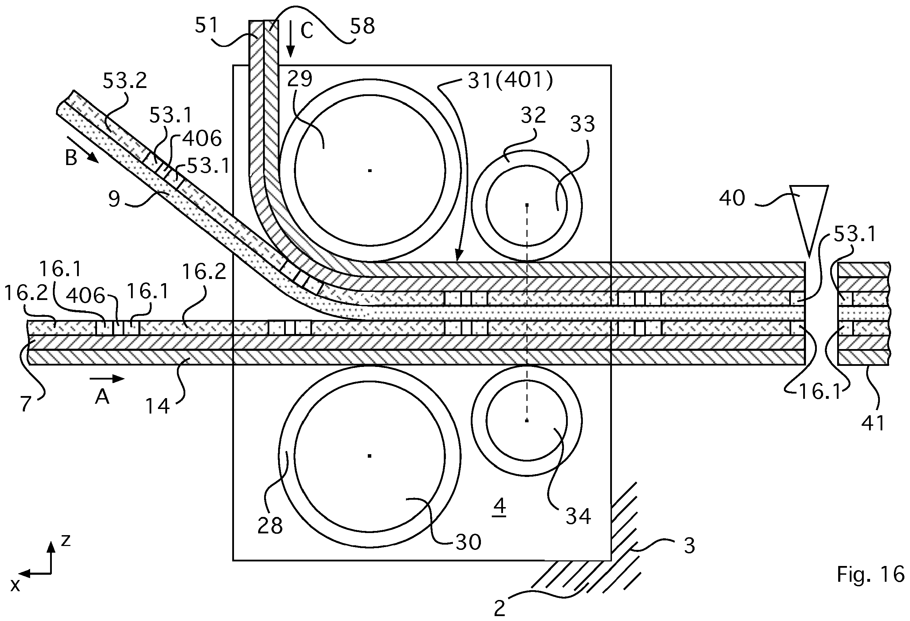

Die in Fig. 2 gezeigte zweite Ausführungsform entspricht der in Fig. 1 gezeigten ersten Ausführungsform, abgesehen von den nachfolgend erläuterten Unterschieden. Die zweite Ausführungsform dient der Herstellung eines Substratverbundes 31', der ein drittes bandförmiges Substrat 51 zusätzlich zu dem ersten und zweiten Substrat 7, 9 umfasst. Dazu wird, abweichend von der ersten Ausführungsform, keine Schutzfolie auf die zweite Flächenseite des zweiten Substrates 9 aufgebracht, sondern mittels einer zweiten Auftragungseinrichtung 52 ein zweites Verbindungsmittel 53 auf die zweite Flächenseite 22 des zweiten Substrates 9 aufgebracht (siehe Fig. 16). Dabei wird das zweite Substrat 9 an seiner ersten Flächenseite 21 mittels Stützrollen 54, die nicht angetrieben sind, abgestützt. Die Auftragung des zweiten Verbindungsmittels 53 mittels der zweiten Auftragungseinrichtung 52 kann, wie in Fig. 2 gezeigt, über eine gewisse Wegstrecke des Bahnlaufes des zweiten Substrates 9 erfolgen. Dazu kann die zweite Auftragungseinrichtung 52 eine erste Auftragungseinheit 52a und eine zweite Auftragungseinheit 52b umfassen, die in Bezug auf die Laufrichtung des zweiten Substrates 9 nach der ersten Auftragungseinheit 52a angeordnet ist.

Zum Transport des zweiten Substrates 9 ist eine zusätzliche Führungsrolle 10.2 vorgesehen, die angetrieben sein kann. Die beiden Führungsrollen 10.2 führen das zweite Substrat 9 durch die zweite Durchführung 25 zu der Verbindungseinrichtung 28 in der Verbindungskammer 2. Im Gegensatz zur ersten Ausführungsform wird das zweite Substrat 9 dabei allerdings so geführt, dass es mit seiner ersten Flächenseite 21 an den Rollen 27 der zweiten Durchführung 25 anliegt. Die zweite Flächenseite 22, auf die das zweite Verbindungsmittel 53 aufgetragen worden ist, gelangt nicht in Kontakt mit den Rollen 26, 27 der zweiten Durchführung 25, insbesondere nicht mit den Rollen 26, denen sie zugewandt ist. Auf diese Weise wird die Flächenseite des zweiten Substrates 9 geschont, die mit dem zweiten Verbindungsmittel 53 beschichtet ist.

In der zweiten Ausführungsform umfasst die erfindungsgemäße Vorrichtung 1 einen dritten Abwickler 55 für das dritte bandförmige Substrat 51, das als Coil bereitgestellt wird. Das dritte Substrat 51 wird mittels einer ersten Führungsrolle 10.3 in Pfeilrichtung C von dem dritten Abwickler 55 in die Verbindungskammer 2 geführt. Die erste Führungsrolle 10.3 ist außerhalb der Verbindungskammer 2 angeordnet. Der ersten Führungsrolle 10.3 ist dabei nur eine der Flächenseiten des dritten Substrates 51, nämlich seine zweite Flächenseite 57, zugewandt. Die andere, d. h. erste Flächenseite 56, des dritten Substrates 51 ist der ersten Führungsrolle 10.3 abgewandt. Die erste Führungsrolle 10.3 ist eine angetriebene Rolle. Die erste Führungsrolle 10.3 bewirkt als angetriebene Umlenkrolle den Transport des dritten Substrates 51.

In der in Fig. 2 gezeigten Ausführungsform steht die erste Führungsrolle 10.3 nicht in direktem Kontakt mit der zweiten Flächenseite 57 des dritten Substrates 51. Nach dem Abwickeln des dritten Substrates 51 vom dritten Abwickler 55 wird auf die zweite Flächenseite 57 des dritten Substrates 51 eine Schutzfolie 58 aufgebracht. Die Schutzfolie 58 wird als Coil bereitgestellt und von einem Abwickler 59 abgewickelt. Die Schutzfolie 58 bedeckt die zweite Flächenseite 57 des dritten Substrates 51 über dessen gesamte Breite. Die erste Führungsrolle 10.3 steht in Kontakt mit der auf die zweite Flächenseite 57 aufgebrachten Schutzfolie 58. Auf das dritte Substrat 51 wird kein Verbindungsmittel aufgebracht.

Nach dem Aufbringen der Schutzfolie 58 gelangt das dritte Substrat 51 über eine vierte abgedichtete Durchführung 60 in den Innenraum 4 der Verbindungskammer 2. Die vierte Durchführung 60 weist mehrere Paare von Rollen 61, 62 auf. Zwischen der ersten Reihe von Rollen 61 und der zweiten Reihe von Rollen 62 ist ein Spalt ausgebildet, durch den das dritte Substrat 51 in die Verbindungskammer 2 gelangt. Dabei liegt das dritte Substrat 51 nur mit der Schutzfolie 58, die sich auf seiner zweiten Flächenseite 57 befindet, auf Rollen, und zwar den Rollen 61, auf. Die erste Flächenseite 56 des dritten Substrates 51 gelangt nicht in Kontakt mit den Rollen 62. Eine oder mehrere der Rollen 61, 62 können temperiert sein.

Die erste Durchführung 18, die zweite Durchführung 25 und die vierte Durchführung 60 sind beabstandet voneinander in der Wandung 3 der Verbindungskammer 2 derart ausgebildet, dass die zweite Durchführung 25 zwischen der ersten Durchführung 18 und der vierten Durchführung 60 angeordnet ist. Die Anordnung der Durchführungen 18, 25, 60 entspricht der Lage der Substrate 7, 9, 51 in dem Substratverbund 31'.

Im Innenraum 4 der Verbindungskammer 2 werden das erste Substrat 7, das zweite Substrat 9 und das dritte Substrat 51 derart durch den Spalt zwischen den Rollen 29, 30 der Verbindungseinrichtung 28 geführt, dass die erste Flächenseite 12 des ersten Substrates 7 der ersten Flächenseite 21 des zweiten Substrates 9 gegenüberliegt und dass die zweite Flächenseite 22 des zweiten Substrates 9 der ersten Flächenseite 56 des dritten Substrates 51 gegenüberliegt. In dem Spalt kommen die erste Flächenseite 21 des zweiten Substrates 9 in Kontakt mit dem ersten Verbindungsmittel 16, das auf die erste Flächenseite 12 des ersten Substrates 7 aufgebracht ist, und die erste Flächenseite 56 des dritten Substrates 51 in Kontakt mit dem zweiten Verbindungsmittel 53, das auf die zweite Flächenseite 22 des zweiten Substrates 9 aufgebracht ist. Das erste Verbindungsmittel 16 bewirkt dabei die Herstellung einer Verbindung zwischen dem ersten und zweiten Substrat 7, 9, während das zweite Verbindungsmittel 53 dabei die Herstellung einer Verbindung zwischen dem zweiten und dritten Substrat 9, 51 bewirkt, wodurch ein Substratverbund 31' erhalten wird.

Der Substratverbund 31' wird dann, wie in Zusammenhang mit der ersten Ausführungsform beschrieben, zu der Kalibrierungseinrichtung 32, anschließend durch die dritte Durchführung 37 zu der Trenneinrichtung 40 geführt, in der er in Zuschnitte 41' zerlegt wird.

Es ist in Fig. 2 zu erkennen, dass weitere bandförmige Substrate zur Herstellung eines Substratverbundes vorgesehen sein können. Verbindungsmittel wird dabei auf alle Substrate aufgebracht, die in dem herzustellenden Substratverbund innen liegen. Ferner wird auf ein außenliegendes Substrat, und zwar dessen innliegender Flächenseite, Verbindungsmittel aufgebracht. Abgesehen von dem anderen außenliegenden Substrat, auf das überhaupt kein Verbindungsmittel aufgebracht wird, wird jeweils nur auf jeweils eine Flächenseite der Substrate Verbindungsmittel aufgebracht, und zwar derart, dass einer Flächenseite eines Substrates, auf die Verbindungsmittel aufgebracht worden ist, eine Flächenseite eines benachbarten Substrates gegenüberliegt, auf die kein Verbindungsmittel aufgebracht ist.

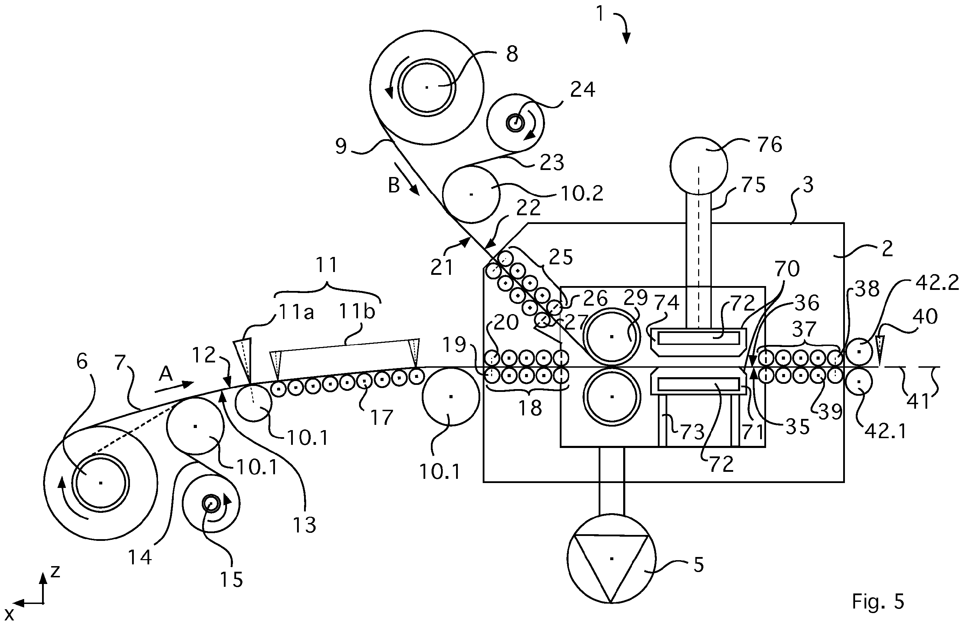

Die in Fig. 5 gezeigte vierte Ausführungsform entspricht der in Fig. 1 gezeigten ersten Ausführungsform, außer dass eine andere Kalibrierungseinrichtung vorgesehen ist. Die in der vierten Ausführungsform vorgesehene Kalibrierungseinrichtung 70 weist ein Paar einander unter Ausbildung eines Spaltes gegenüberliegende Kalibrierebenen 71, 74 auf. Durch den Spalt zwischen den Kalibrierebenen 71, 74 wird der Substratverbund 31 geführt. Eine oder beide Kalibrierebenen 71, 74 können beweglich sein. Ist eine feststehende Kalibrierebene vorgesehen, so ist dies zweckmäßigerweise die untere Kalibrierebene 71. In Fig. 5 ist die untere Kalibrierebene 71 mittels einer Fixierung 73 im Innenraum 4 der Verbindungskammer 2 fixiert, so dass sie feststehend ist. Die obere Kalibrierebene 74 ist beweglich. Zur Bewegung der Kalibrierebene ist ein Antrieb 76 vorgesehen, der außerhalb der Verbindungskammer 2 angeordnet ist und über eine abgedichtete Durchführung 75 mit der oberen Kalibrierebene 74 derart verbunden ist, dass die obere Kalibrierebene 74 bewegt werden kann. Innerhalb einer oder beider Kalibrierebenen 71, 74 kann ein Prozesselement 72, beispielsweise ein Heizer, angeordnet sein.

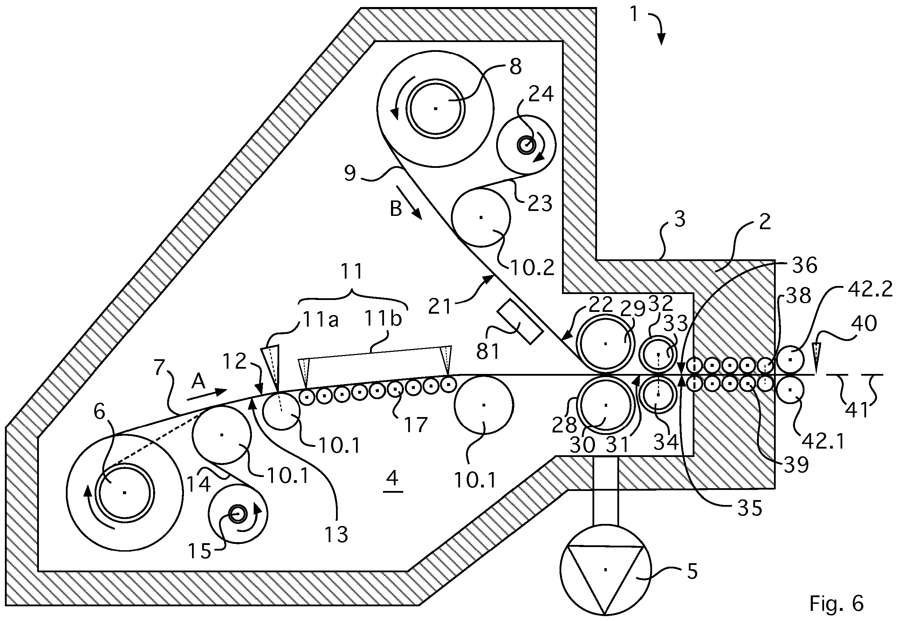

Die in Fig. 6 gezeigte fünfte Ausführungsform entspricht der in Fig. 1 gezeigten ersten Ausführungsform, außer dass die Abwickler 6, 8 für das erste und zweite Substrat 7, 9 und die Abwickler 15, 24 für die Schutzfolien 14, 23 im Innenraum 4 der Verbindungskammer 2 angeordnet sind. Damit entfallen die erste und zweite Durchführung 18, 25. Zusätzlich ist im Innenraum 4 eine Bearbeitungseinrichtung 81 zur Bearbeitung der ersten Flächenseite 21 des zweiten Substrates 9 angeordnet.

Die fünfte Ausführungsform veranschaulicht, dass die erfindungsgemäße Vorrichtung und das erfindungsgemäße Verfahren auch im Batch-Betrieb arbeiten können. Allerdings wird ein Substratverbund 31 kontinuierlich gefertigt, solange nicht ein Substrat vollständig von seinem Coil abgewickelt ist. Zum Coilwechsel kann die Verbindungskammer 2 geöffnet werden. Diese Ausführungsform ist insbesondere als Versuchsanlagen geeignet.

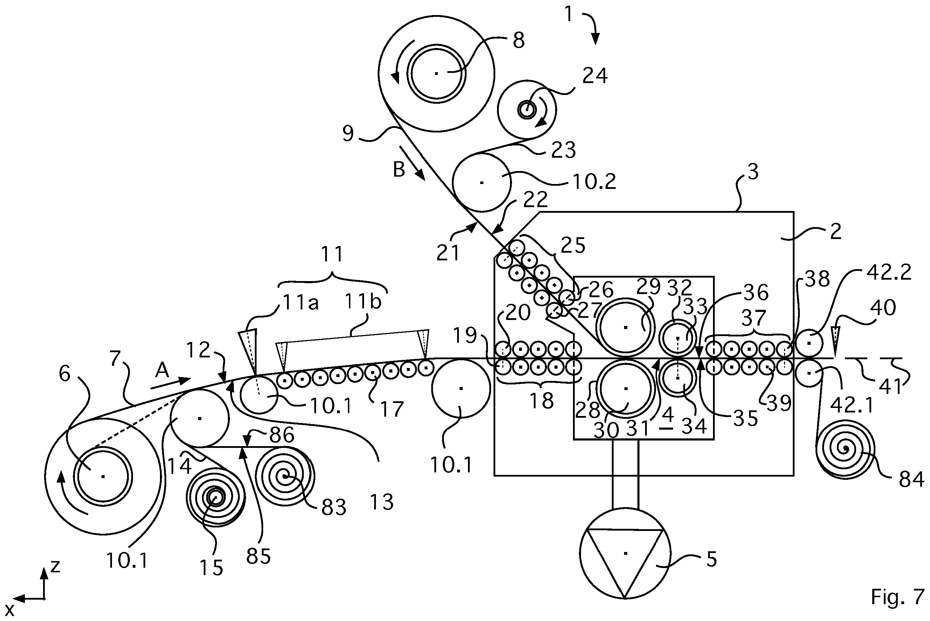

Die in Fig. 7 gezeigte sechste Ausführungsform entspricht der in Fig. 1 gezeigten ersten Ausführungsform, außer dass zusätzlich ein endliches Transportband vorgesehen ist. Das endliche Transportband sorgt für einen besonders schonenden Transport zunächst des ersten Substrates 7 und dann des Substratverbundes 31.

Das endliche Transportband besitzt einen Abwickler 83 und einen Aufwickler 84, die - in der gezeigten Ausführungsform - außerhalb der Verbindungskammer 2 angeordnet sind. Dabei ist der Abwickler 83 so angeordnet, dass das Transportband mit einer ersten Flächenseite 85 an einer Flächenseite der Schutzfolie 14 abgelegt wird, und zwar bevor diese auf das erste Substrat 7 aufgebracht wird. Die Schutzfolie 14 wird anschließend mit ihrer freiliegenden Flächenseite, wie in Fig. 1 beschrieben, auf die zweite Flächenseite 13 des ersten Substrates 7 aufgebracht. Im Gegensatz zu der in Fig. 1 gezeigten Ausführungsform steht nun nicht mehr die Schutzfolie 14 in Kontakt mit den Führungsrollen 10.1, 42, den Rollen 19 der ersten Durchführung 18, der Rolle 30 der Verbindungseinrichtung 28, der Rolle 34 der Kalibrierungseinrichtung 32 und den Rollen 39 der dritten Durchführung 37, sondern die zweite Flächenseite 86 des Transportbandes. Nach Passieren der dritten Durchführung 37 wird das Transportband an den zweiten Führungsrollen 42, die vor der Trenneinrichtung 40 angeordnet sind, auf den Aufwickler 84 aufgewickelt. Das Transportband wird also von dem Substratverbund 31 entfernt, bevor dieser in Zuschnitte 41 zerlegt wird. Anstelle eines endlichen Transportbandes kann auch ein endloses Transportband vorgesehen sein.

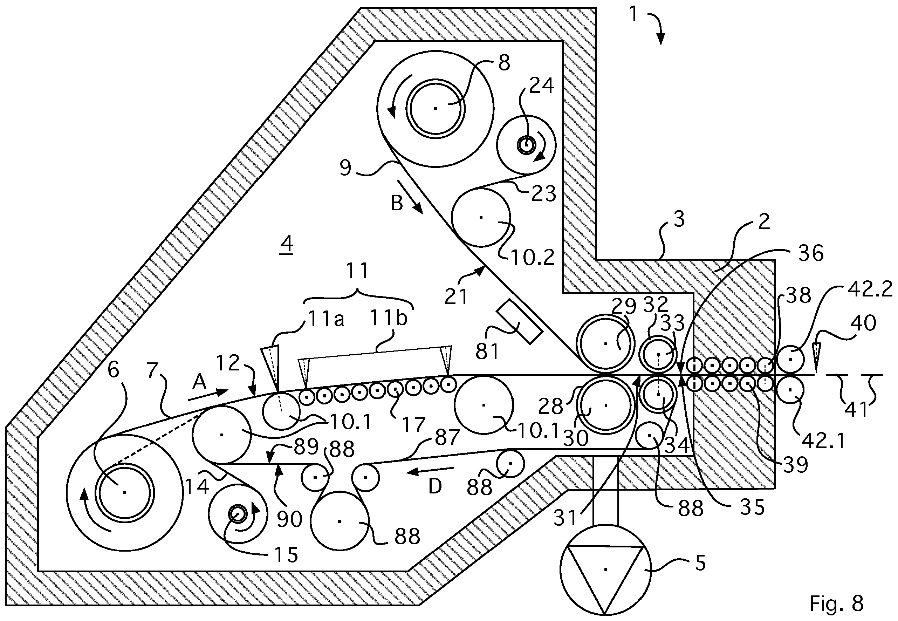

Die in Fig. 8 gezeigte siebente Ausführungsform entspricht der in Fig. 6 gezeigten fünften Ausführungsform, außer dass zusätzlich ein endloses Transportband 87 vorgesehen ist. Das endlose Transportband 87 sorgt für einen besonders schonenden Transport zunächst des ersten Substrates 7 und dann des Substratverbundes 31.

Das endlose Transportband 87 wird mittels Führungsrollen 88, von denen wenigstens eine angetrieben ist, unter ständigem Umlauf in Richtung des Pfeiles D transportiert. Das Transportband 87 und sämtliche Führungsrollen 88 für das Transportband 87 sind im Innenraum 4 der Verbindungskammer 2 angeordnet. Das Transportband 87 wird zunächst in Kontakt mit der Schutzfolie 14 gebracht, bevor diese auf das erste Substrat 7 aufgebracht wird. Dabei liegt eine erste Flächenseite 89 an einer Flächenseite der Schutzfolie 14 an. Die Schutzfolie 14 wird anschließend mit ihrer freiliegenden Flächenseite, wie in Fig. 1 beschrieben, auf die zweite Flächenseite 13 des ersten Substrates 7 aufgebracht. Im Gegensatz zu der in Fig. 6 gezeigten Ausführungsform steht nun nicht mehr die Schutzfolie 14 in Kontakt mit den Führungsrollen 10.1, 42.1, der Rolle 30 der Verbindungseinrichtung 28 und der Rolle 34 der Kalibrierungseinrichtung 32, sondern die zweite Flächenseite 90 des Transportbandes. Nach Passieren der Kalibrierungseinrichtung 32 und vor dem Führen des Substratverbundes 31 durch die dritte Durchführung 37 wird das Transportband 87 von dem Substratverbund 31 getrennt und zurück an die Stelle geführt, an der es erneut in Kontakt mit der Schutzfolie 14 gebracht wird. Anstelle eines endlichen Transportbandes kann auch ein endloses Transportband vorgesehen sein.

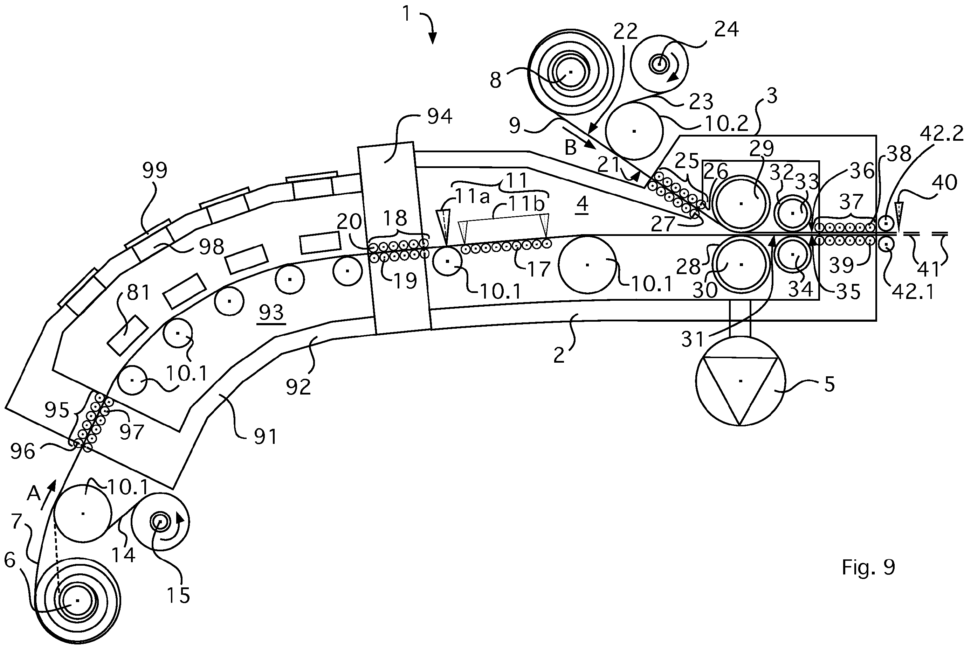

Die in Fig. 9 gezeigte achte Ausführungsform entspricht der in Fig. 1 gezeigten ersten Ausführungsform mit folgenden Unterschieden:
Die erfindungsgemäße Vorrichtung weist zusätzlich eine Bearbeitungskammer 91 auf, die von dem ersten Substrat 7 durchlaufen wird, bevor es in die Verbindungskammer 2 gelangt. Dabei ist die erste Auftragungseinrichtung 11 ist in der Verbindungskammer 2 angeordnet.

Die Bearbeitungskammer 91 weist eine Wandung 92 auf, die einen Innenraum 93 umgibt. Die Bearbeitungskammer 91 grenzt an die Verbindungskammer 2 an, wobei eine Trennwand 94, die Teil der Wandung 3 der Verbindungskammer 2 und der Wandung 92 der Bearbeitungskammer 91 sein kann, den Innenraum 93 der Bearbeitungskammer 91 vom Innenraum 4 der Verbindungskammer 2 trennt. In der Trennwand 94 ist die erste Durchführung 18 zum Führen des ersten Substrates 7 ausgebildet, durch die das erste Substrat 7 aus dem Innenraum 93 der Bearbeitungskammer 91 in den Innenraum 4 der Verbindungskammer 2 geführt wird. In der Verbindungskammer 2 gelangt das erste Substrat zunächst zu der ersten Auftragungseinrichtung 11, die - anders als in der in Fig. 1 gezeigten ersten Ausführungsform - nicht außerhalb, sondern innerhalb der Verbindungskammer 2 angeordnet ist. In der Verbindungskammer 2 wird das erste Verbindungsmittel 16 aufgetragen. Anschließend werden das erste und das zweite Substrat, wie im Zusammenhang mit der ersten Ausführungsform beschrieben, in der Verbindungseinrichtung 28 zusammengeführt und dort miteinander flächig verbunden.

Ausgehend von dem ersten Abwickler 6, der außerhalb der Bearbeitungskammer 91 und der Verbindungskammer 2 angeordnet ist, wird das erste Substrat 7 zunächst, wie in Bezug auf Fig. 1 beschrieben wurde, auf seiner zweiten Flächenseite 13 mit der Schutzfolie 14 versehen. Anschließend wird das mit der Schutzfolie 14 versehene erste Substrat 7 über eine fünfte Durchführung 95 in den Innenraum 93 der Bearbeitungskammer 91 geführt. Die fünfte Durchführung 95 weist mehrere Paare von Rollen 96, 97 auf. Zwischen der ersten Reihe von Rollen 96 und der zweiten Reihe von Rollen 97 ist ein Spalt ausgebildet, durch den das erste Substrat 7 in die Bearbeitungskammer 91 gelangt. Dabei liegt das erste Substrat 7 nur mit der Schutzfolie 14, die sich auf seiner zweiten Flächenseite 13 befindet, auf Rollen, und zwar den Rollen 97, auf. Die erste Flächenseite 12 des ersten Substrates 7 gelangt nicht in Kontakt mit den Rollen 96. Eine oder mehrere der Rollen 96, 97 können temperiert sein.

Im Innenraum 93 der Bearbeitungskammer 91 ist zumindest eine Bearbeitungseinrichtung 81 angeordnet. Vorzugsweise sind mehrere Bearbeitungseinrichtungen im Innenraum 93 der Bearbeitungskammer 91 vorgesehen. Der Innenraum 93 der Bearbeitungskammer kann mit einer Einrichtung zum Einstellen der physikalischen und/oder chemischen Bedingungen in der Bearbeitungskammer, beispielsweise einer Pumpe zur Erzeugung eines Vakuums, einer Überdruck-Gaszuführung zur Erzeugung inerter Bedingungen in Bearbeitungskammer oder beiden, verbunden sein (nicht gezeigt). Es können physikalische und/oder chemische Bedingungen in der Bearbeitungskammer 91 eingestellt werden, die sich von denen, die in der Umgebung und/oder in der Verbindungskammer 2 herrschen, unterscheiden. Das ist aber nicht erforderlich.

In der Wandung 92 der Bearbeitungskammer 91 können Öffnungen 98 ausgebildet sein, die mittels Flanschen 99 verschließbar sind. Auf diese Weise ist ein leichter Zugang zum Innenraum 93 möglich, was beispielsweise eine einfache Wartung der dort befindlichen Einrichtungen ermöglicht.

Mittels der Bearbeitungseinrichtungen 81 können beispielsweise funktionelle Schichten auf die erste Flächenseite 12 des ersten Substrates 7 aufgebracht und strukturiert werden. Auf diese Weise können zum Beispiel Kontaktbahnen, aktive und passive Schichten, auf der ersten Flächenseite 12 des ersten Substrates 7 ausgebildet werden. In der Bearbeitungskammer 91 können auch Messvorrichtungen (nicht gezeigt) angeordnet sein.

Zur Unterstützung des Transportes des ersten Substrates 7 kann ein endloses oder endliches Transportband (nicht gezeigt) vorgesehen sein. Das Transportband kann dabei das erste Substrat 7 durch die Bearbeitungskammer 91 und die Verbindungskammer 2 führen.

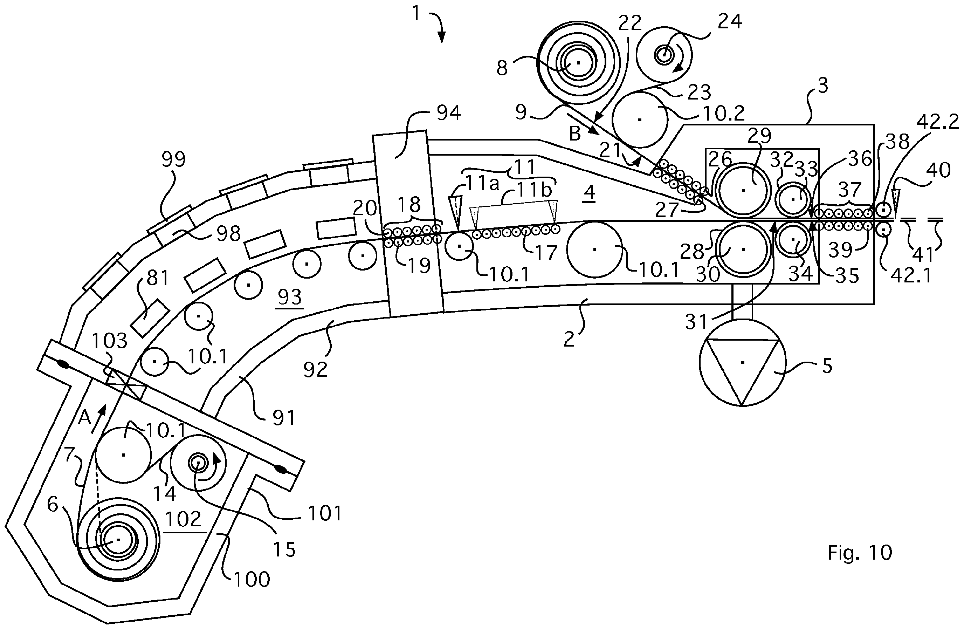

Die in Fig. 10 gezeigte neunte Ausführungsform entspricht der in Fig. 9 gezeigten achten Ausführungsform, außer dass zusätzlich der erste Abwickler 6 und der Abwickler 15 für die Schutzfolie 14 in einem ersten Abwicklergehäuse 100 angeordnet sind. Das Abwicklergehäuse 100 umfasst eine Gehäusewandung 101, die an der Wandung 92 der Bearbeitungskammer 91 derartig angeordnet ist, dass ein abgeschlossener Gehäuseinnenraum 102 entsteht. In diesem Gehäuseinnenraum 102 befinden sich der erste Abwickler 6 und der Abwickler 15 für die Schutzfolie 14. Die Schutzfolie 14 wird in dem Gehäuseinnenraum 102 auf das erste Substrat 7 aufgebracht. Anschließend wird das mit der Schutzfolie 14 versehene erste Substrat 7 über ein Ventil 103 in den Innenraum 93 der Bearbeitungskammer 91 geführt. Ventil 103 ersetzt damit die fünfte Durchführung 95.

Innenraum 102 ist gegen die Umgebung abgeschlossen. In ihm können die gleichen physikalischen und/oder chemischen Bedingungen eingestellt werden, die im Innenraum 93 der Bearbeitungskammer 91 herrschen. Herrschen sowohl im Innenraum 102 des ersten Abwicklergehäuses 100 die gleichen Bedingungen wie im Innenraum 93 der Bearbeitungskammer 91, so kann das Ventil 103 geöffnet sein. Das Ventil 103 kann geschlossen werden, wenn ein Coilwechsel erforderlich ist. Das ist mit einem Substrat-Stillstand verbunden. Das erste Abwicklergehäuse 100 kann dann auf Umgebungsbedingungen gebracht und geöffnet werden, während die Bedingungen im Innenraum 93 der Bearbeitungskammer 91 unverändert bleiben können. Sobald ein neues Coil in das erste Abwicklergehäuse 100 eingebracht ist, können darin erneut die Bedingungen hergestellt werden, die denen in der Bearbeitungskammer gleichen. Anschließend kann das Ventil 103 geöffnet und das Verfahren fortgesetzt werden.

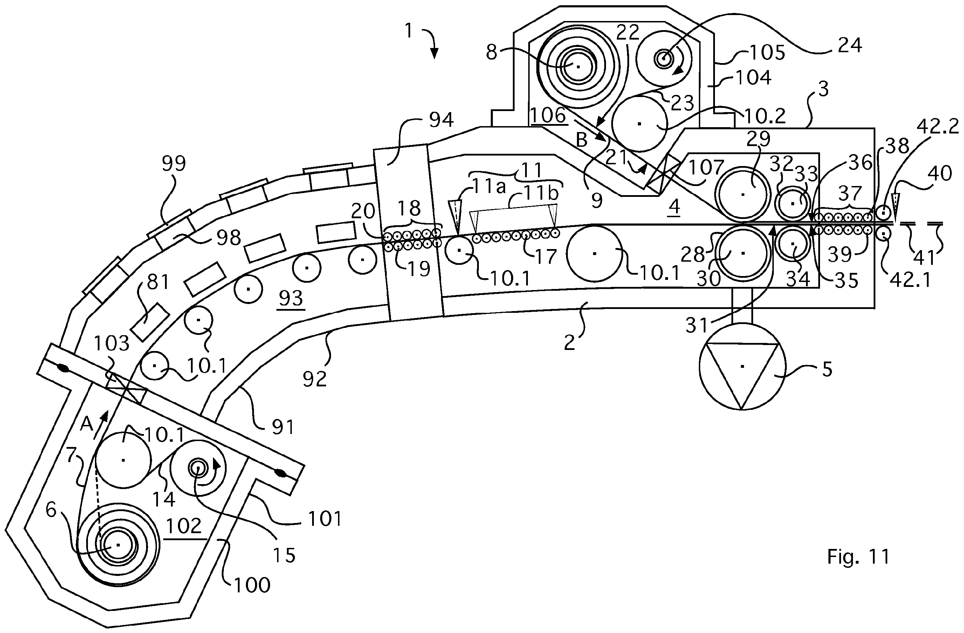

Die in Fig. 11 gezeigte zehnte Ausführungsform entspricht der in Fig. 10 gezeigten neunten Ausführungsform, außer dass zusätzlich der zweite Abwickler 8 und der Abwickler 24 für die Schutzfolie 23 in einem zweiten Abwicklergehäuse 104 angeordnet sind. Das Abwicklergehäuse 104 umfasst eine Gehäusewandung 105, die an der Wandung 3 der Verbindungskammer 2 derartig angeordnet ist, dass ein abgeschlossener Gehäuseinnenraum 106 entsteht. In diesem Gehäuseinnenraum 106 befinden sich der zweite Abwickler 8 und der Abwickler 24 für die Schutzfolie 23. Die Schutzfolie 23 wird in dem Gehäuseinnenraum 106 auf das zweite Substrat 9 aufgebracht. Anschließend wird das mit der Schutzfolie 23 versehene zweite Substrat 9 über ein Ventil 107 in den Innenraum 4 der Verbindungskammer 2 geführt. Ventil 107 ersetzt damit die zweite Durchführung 25.

Innenraum 106 ist gegen die Umgebung abgeschlossen. In ihm können die gleichen physikalischen und/oder chemischen Bedingungen eingestellt werden, die im Innenraum 4 der Verbindungskammer 2 herrschen. Herrschen sowohl in Innenraum 106 des zweiten Abwicklergehäuses 104 die gleichen Bedingungen wie im Innenraum 4 der Verbindungskammer 2, so kann das Ventil 107 geöffnet sein. Das Ventil 107 kann geschlossen werden, wenn ein Coilwechsel erforderlich ist. Das ist mit einem Substrat-Stillstand verbunden. Das zweite Abwicklergehäuse 104 kann dann auf Umgebungsbedingungen gebracht und geöffnet werden, während die Bedingungen im Innenraum 4 der Verbindungskammer 2 unverändert bleiben können. Sobald ein neues Coil in das zweite Abwicklergehäuse 104 eingebracht ist, können darin erneut die Bedingungen hergestellt werden, die denen in der Verbindungskammer 2 gleichen. Anschließend kann das Ventil 107 geöffnet und das Verfahren fortgesetzt werden.

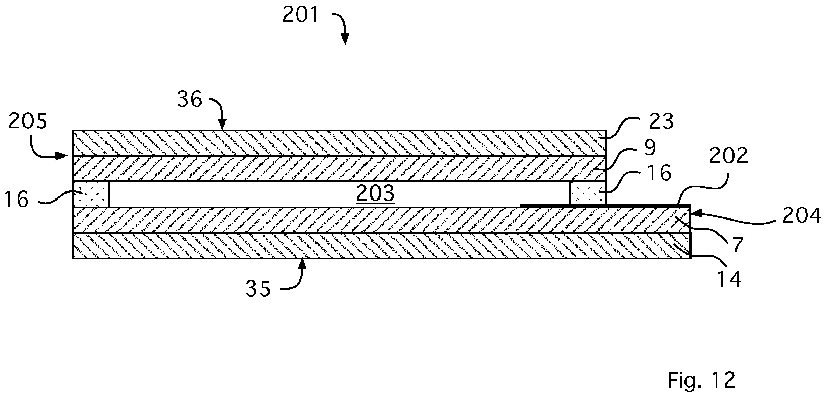

In den Figuren 12 bis 14 sind Schnittdarstellungen, quer zur Laufrichtung des Substratverbundes, von beispielhaften Substratverbünden gezeigt, die mittels der erfindungsgemäßen Vorrichtung hergestellt werden können. Die Substratverbünde sind vor dem Trennen in Zuschnitte gezeigt. Der Aufbau der Substratverbünde wird dabei von unten nach oben beschrieben. Die Angaben "unten" und "oben" beziehen sich dabei lediglich auf die gewählte Darstellung.

Der in Fig. 12 gezeigte Substratverbund 201 weist folgenden Aufbau auf: Auf der oberen Flächenseite der Schutzfolie 14, die die erste Außenseite 35 des Substratverbundes 201 bildet, befindet sich das erste Substrat 7, wobei dessen zweite Flächenseite 13 der Schutzfolie 14 zugewandt ist. Auf einem Teilbereich der ersten Flächenseite 12 des ersten Substrates 7 ist eine Kontaktbahn 202 ausgebildet. Der Teilbereich grenzt an eine Längskante 204 des Substratverbundes 201 an. Die Kontaktbahn 202 kann beispielsweise mittels einer Bearbeitungseinrichtung 81 aufgebracht worden sein. An der gegenüberliegenden Längskante 205 des Substratverbundes 201 ist ein Steg aus Verbindungsmittel 16 aufgebracht. Nach innen versetzt zur Längskante des ersten Substrates 7 befindet sich ein weiterer Steg aus Verbindungsmittel 16, wobei ein innenliegender Bereich 203 zwischen den Stegen aus Verbindungsmittel 16 nicht von Verbindungsmittel bedeckt ist. Die Stege aus Verbindungsmittel 16 können mit der ersten Auftragungseinrichtung 11 aufgebracht worden sein. Die Stege aus Verbindungsmittel 16 sind Teil eines umlaufenden Stranges, der einen Teilbereich der Oberfläche des ersten Substrates 7 umschließt.

Auf die Stege aus Verbindungsmittel 16 ist das zweite Substrat 9 aufgebracht, und zwar derart, dass es mit seiner ersten Flächenseite 21 auf dem Verbindungsmittel 16 aufliegt. Auf der zweiten Flächenseite 22 des zweiten Substrates 9 befindet sich die Schutzfolie 23, die die zweite Außenseite 36 des Substratverbundes 201 bildet.

An der Längskante 204 ist ein Versatz ausgebildet, an dem die Kontaktbahn 202 freiliegt. Das zweite Substrat 9 und die Schutzfolie 23 sind schmaler als das erste Substrat 7 und die Schutzfolie 14. Der Versatz erstreckt sich bei der in Fig. 12 gezeigten Ausführungsform über die gesamte Länge des Substratverbundes 201. In einer alternativen Ausführungsform kann jedoch vorgesehen sein, dass ein Versatz nur im Bereich von Kontaktbahnen 202, also an diskreten Stellen, ausgebildet ist. Außerhalb der Kontaktbahnen 202 können dann das zweite Substrat 9 und die Schutzfolie 23 die gleiche Breite wie das erste Substrat 7 und die Schutzfolie 14 aufweisen.

In dem innenliegenden Bereich 203 können sich Hilfsmittel, beispielsweise funktionelle Schichten (nicht gezeigt), befinden. Diese Schichten können über Kontaktbahnen 202 von außen kontaktiert werden. Die Schichten können beispielsweise mit einer Bearbeitungseinrichtung auf die erste Flächenseite 12 des ersten Substrates 7 aufgebracht worden sein.

Der in Fig. 12 gezeigte Substratverbund 201 kann mittels der in Fig. 1 gezeigten ersten Ausführungsform der erfindungsgemäßen Vorrichtung hergestellt werden.

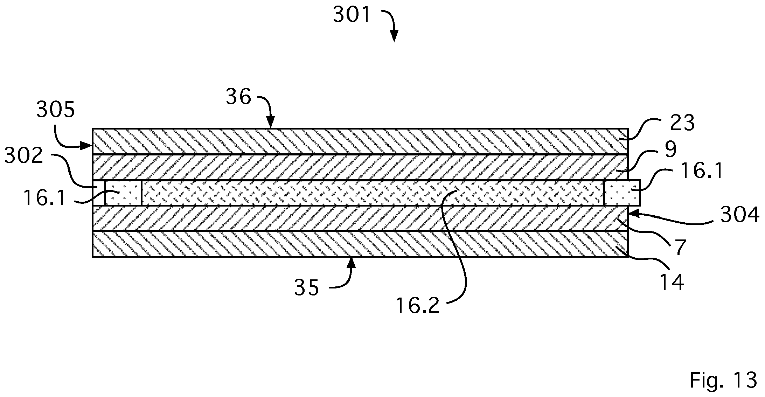

Der in Fig. 13 gezeigte Substratverbund 301 weist folgenden Aufbau auf: Auf der oberen Flächenseite der Schutzfolie 14, die die erste Außenseite 35 des Substratverbundes 301 bildet, befindet sich das erste Substrat 7, wobei dessen zweite Flächenseite 13 der Schutzfolie 14 zugewandt ist. An beiden Längskanten 304, 305 des Substratverbundes 301 sind Stege aus Verbindungsmittel 16.1 auf die erste Flächenseite 12 des ersten Substrates 7 aufgebracht. Dabei steht der Steg aus Verbindungsmittel 16.1, der sich an der Längskante 304 befindet, über das erste und zweite Substrat 7, 9 und die Schutzfolien 14, 23 über, während der Steg aus Verbindungsmittel 16.1, der sich an der Längskante 305 befindet, nach innen versetzt ist. Zwischen den beiden Stegen aus Verbindungsmittel 16.1 ist Verbindungsmittel 16.2 auf die erste Flächenseite 12 des ersten Substrates 7 aufgebracht. Die Stege aus Verbindungsmittel 16.1 können mit der Auftragungseinheit 11a der ersten Auftragungseinrichtung 11, Verbindungsmittel 16.2 kann mit der Auftragungseinheit 11b der ersten Auftragungseinrichtung 11 aufgebracht worden sein. Verbindungsmittel 16.1 und Verbindungsmittel 16.2 können aus dem gleichen oder unterschiedlichen Materialien bestehen. Die Stege aus Verbindungsmittel 16.1 sind Teil eines umlaufenden Stranges, der einen Teilbereich der Oberfläche des ersten Substrates 7 umschließt.

Auf Verbindungsmittel 16.1 und Verbindungsmittel 16.2 ist das zweite Substrat 9 aufgebracht, und zwar derart, dass es mit seiner ersten Flächenseite 21 auf den Verbindungsmitteln 16.1, 16.2 aufliegt. Auf der zweiten Flächenseite 22 des zweiten Substrates 9 befindet sich die Schutzfolie 23, die die zweite Außenseite 36 des Substratverbundes 201 bildet.

Der in Fig. 13 gezeigte Substratverbund 301 kann mittels der in Fig. 1 gezeigten ersten Ausführungsform der erfindungsgemäßen Vorrichtung hergestellt werden.

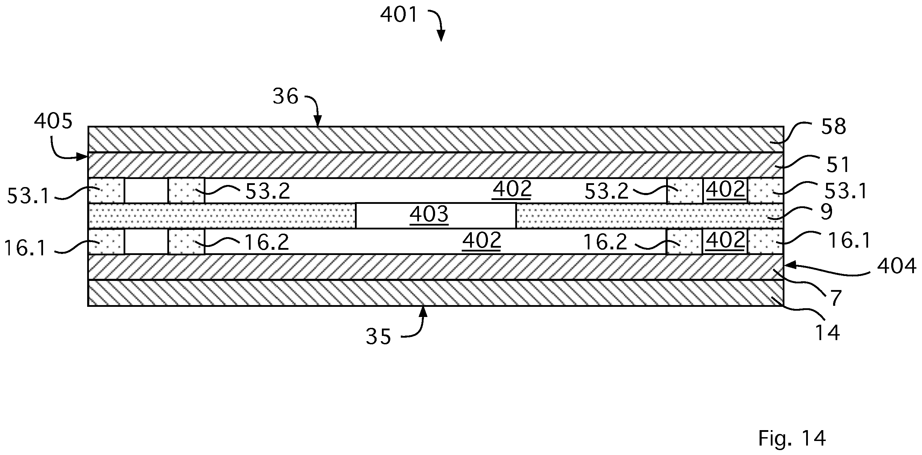

Der in Fig. 14 gezeigte Substratverbund 401 weist folgenden Aufbau auf: Auf der oberen Flächenseite der Schutzfolie 14, die die erste Außenseite 35 des Substratverbundes 401 bildet, befindet sich das erste Substrat 7, wobei dessen zweite Flächenseite 13 der Schutzfolie 14 zugewandt ist. An beiden Längskanten 404, 405 des Substratverbundes 401 sind Stege aus Verbindungsmittel 16.1 auf die erste Flächenseite 12 des ersten Substrates 7 aufgebracht. Beabstandet von den Stegen aus Verbindungsmittel 16.1 sind ferner Stege aus Verbindungsmittel 16.2 auf die erste Flächenseite 12 des ersten Substrates 7 aufgebracht. Zwischen den Stegen aus Verbindungsmittel 16.1 und den Stegen aus Verbindungsmittel 16.2 sowie zwischen den beiden Stegen aus Verbindungsmittel 16.2 sind Bereiche 402 ausgebildet. Die Stege aus Verbindungsmittel 16.1 können mit der Auftragungseinheit 11a der ersten Auftragungseinrichtung 11, Verbindungsmittel 16.2 kann mit der Auftragungseinheit 11b der ersten Auftragungseinrichtung 11 aufgebracht worden sein. Verbindungsmittel 16.1 und Verbindungsmittel 16.2 können aus dem gleichen oder unterschiedlichen Materialien bestehen. Die Stege aus Verbindungsmittel 16.1 sind Teil eines umlaufenden Stranges, der einen Teilbereich der Oberfläche des ersten Substrates 7 an seiner äußeren Kontur umschließt. Die Stege aus Verbindungsmittel 16.2 sind Teil eines umlaufenden Stranges, der den Teilbereich der Oberfläche des ersten Substrates 7 an seiner inneren Kontur umschließt.

Auf Verbindungsmittel 16.1 und Verbindungsmittel 16.2 ist das zweite Substrat 9 aufgebracht, und zwar derart, dass es mit seiner ersten Flächenseite 21 auf den Verbindungsmitteln 16.1, 16.2 aufliegt. Das zweite Substrat weist einen mittigen Durchbruch 403 auf, der beispielsweise für die Realisierung einer Funktion vorteilhaft sein kann. Bei dem Durchbruch kann es sich um eine Bohrung handeln. An beiden Längskanten 404, 405 sind Stege aus Verbindungsmittel 53.1 auf die zweite Flächenseite 22 des zweiten Substrates 9 aufgebracht. Beabstandet von den Stegen aus Verbindungsmittel 53.1 sind ferner Stege aus Verbindungsmittel 53.2 auf die zweite Flächenseite 22 des zweiten Substrates 9 aufgebracht, und zwar im selben Abstand wie zwischen den Stegen aus Verbindungsmittel 16.1 und den Stegen aus Verbindungsmittel 16.2. Zwischen den Stegen aus Verbindungsmittel 53.1 und den Stegen aus Verbindungsmittel 53.2 sowie zwischen den beiden Stegen aus Verbindungsmittel 53.2 sind Bereiche 402 ausgebildet. Die Stege aus Verbindungsmittel 53.1 können mit der Auftragungseinheit 52a der ersten Auftragungseinrichtung 52, Verbindungsmittel 53.2 kann mit der Auftragungseinheit 52b der zweiten Auftragungseinrichtung 52 aufgebracht worden sein. Verbindungsmittel 53.1 und Verbindungsmittel 53.2 können aus dem gleichen oder unterschiedlichen Materialien bestehen. Die Stege aus Verbindungsmittel 53.1 sind Teil eines umlaufenden Stranges, der einen Teilbereich der Oberfläche des zweiten Substrates 9 an seiner äußeren Kontur umschließt. Die Stege aus Verbindungsmittel 53.2 sind Teil eines umlaufenden Stranges, der den Teilbereich der Oberfläche des zweiten Substrates 9 an seiner inneren Kontur umschließt. Die Größe des Teilbereiches, der von den Stegen aus Verbindungsmittel 53.1, 53.2 umschlossen wird, entspricht der Größe des Teilbereiches, der von den Stegen aus Verbindungsmittel 16.1, 16.2 umschlossen wird. Das ist aber nicht zwingend erforderlich. Die umschlossenen Teilbereiche sind in der gezeigten Ausführungsform jeweils doppelt durch Stege aus Verbindungsmittel 16, 53 abgedichtet.

Auf Verbindungsmittel 53.1 und Verbindungsmittel 53.2 ist das dritte Substrat 51 aufgebracht, und zwar derart, dass es mit seiner ersten Flächenseite 56 auf den Verbindungsmitteln 53.1, 53.2 aufliegt. Auf der zweiten Flächenseite 57 des dritten Substrates 51 befindet sich die Schutzfolie 58, die die zweite Außenseite 36 des Substratverbundes 401 bildet.

Der in Fig. 14 gezeigte Substratverbund 401 kann mittels der in Fig. 2 gezeigten zweiten Ausführungsform der erfindungsgemäßen Vorrichtung hergestellt werden. Der Verbindungsprozess zur Herstellung des Substratverbundes 401 ist in Fig. 16 weiter veranschaulicht, in der der Verbindungsvorgang in der Verbindungskammer 2 vereinfacht gezeigt ist. Die Stege aus Verbindungsmittel 16.2, 53.2, Führungseinrichtungen und Durchführungen sind zur Vereinfachung der Darstellung in Fig. 16 nicht gezeigt. Es ist dort insbesondere zu erkennen, dass Verbindungsmittel 16.1, 16.2 in einem regelmäßigen Muster auf das erste Substrat 7 aufgetragen worden sind. Dabei ist das Verbindungsmittel 16.2 jeweils zwischen einem umlaufenden Strang aus Verbindungsmittel 16.1 angeordnet. Zwischen zwei benachbarten umlaufenden Stegen 16.1, 16.1 ist jeweils ein Spalt 406 ausgebildet, der sich über die gesamte Breite des ersten Substrates 7 erstreckt. Im gleichen Muster ist Verbindungsmittel 53.1, 53.2 auf das zweite Substrat 9 aufgetragen worden. Dabei ist das Verbindungsmittel 53.2 jeweils zwischen einem umlaufenden Strang aus Verbindungsmittel 53.1 angeordnet. Zwischen zwei benachbarten umlaufenden Stegen 53.1 ist jeweils ein Spalt 406 ausgebildet, der sich über die gesamte Breite des zweiten Substrates 9 erstreckt und sich im zusammengefügten Substratverbund 401 in Höhe eines Spaltes 406 zwischen benachbarten umlaufenden Stegen 16.1 befindet. An den Spalten 406 wird der Substratverbund 31 mittels der Trenneinrichtung 40 in Zuschnitte 41 getrennt.

Verbindungsmittel 16.1, 16.2, 53.1, 53.2 können aus dem gleichen oder unterschiedlichen Materialien bestehen. Die Stege aus Verbindungsmittel 16.1 und 53.1 sind jeweils Teil eines umlaufenden Stranges, der einen Teilbereich der Oberfläche des ersten Substrates 7 bzw. einen Teilbereich der Oberfläche des zweiten Substrates 9 umschließt. An den Spalten 406 kann die Trennung des Substratverbundes 401 in Zuschnitte 41 vorgenommen werden, ohne die von Verbindungsmittel umgebenen Teilbereiche zu beschädigen, d.h. ohne die umlaufenden Stränge zu öffnen.

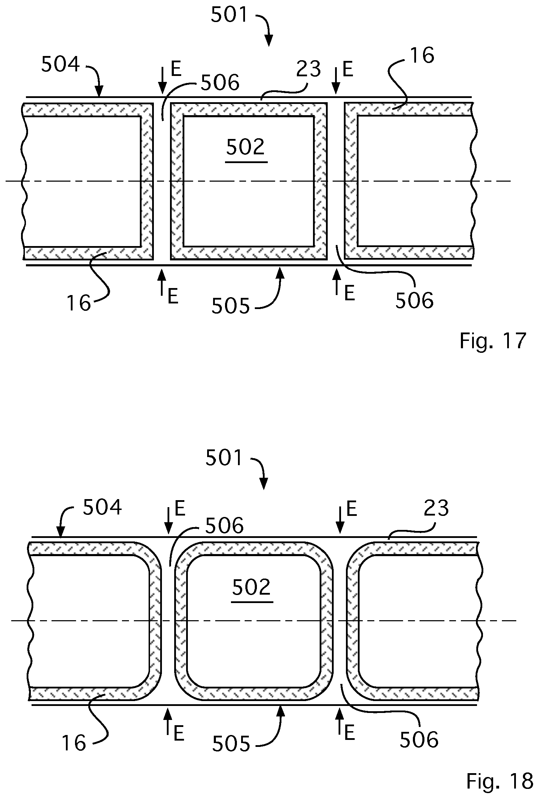

Die Figuren 17 bis 20 zeigen Draufsichten auf Substratverbünde 501 vor dessen Trennung in Zuschnitte 41. Zur besseren Veranschaulichung sind die Verbindungsmittel 16 mit geschlossenen Linien gezeichnet, obwohl sie von dem Substrat 9 bedeckt sind, das seinerseits mit der Schutzfolie 23 bedeckt ist. Es ist in den Figuren 17 bis 20 zu erkennen, dass das Verbindungsmittel 16 in geschlossener, ansonsten aber beliebiger Geometrie auf die erste Flächenseite 12 des ersten Substrates 7 aufgebracht werden kann. Vorzugsweise werden dabei regelmäßige Muster ausgebildet. Ein Strang des Verbindungsmittels 16 umgrenzt dabei einen Teilbereich 502 der Oberfläche des ersten Substrates 7. Dabei sind die äußeren Konturen des Stranges des Verbindungsmittels 16 sowohl von den Längskanten 504, 505 als auch von dem benachbarten Strang des Verbindungsmittels 16 beabstandet.

In den Figuren 17 und 18 ist Spalt 506 zwischen benachbarten Strängen von Verbindungsmittel 16 ausgebildet. Durch diesen Spalt 506 verläuft die Trennlinie E-E, wenn der Substratverbunde 501 mittels der Trenneinrichtung 40 in Zuschnitte 41 zerlegt wird. In Fig. 17 ist das Verbindungsmittel 16 derart aufgebracht, dass der Teilbereich 502 quadratisch ist. In Fig. 18 ist das Verbindungsmittel 16 derart aufgebracht, dass der Teilbereich 502 im Wesentlichen quadratisch ist, aber abgerundete Ecken besitzt.

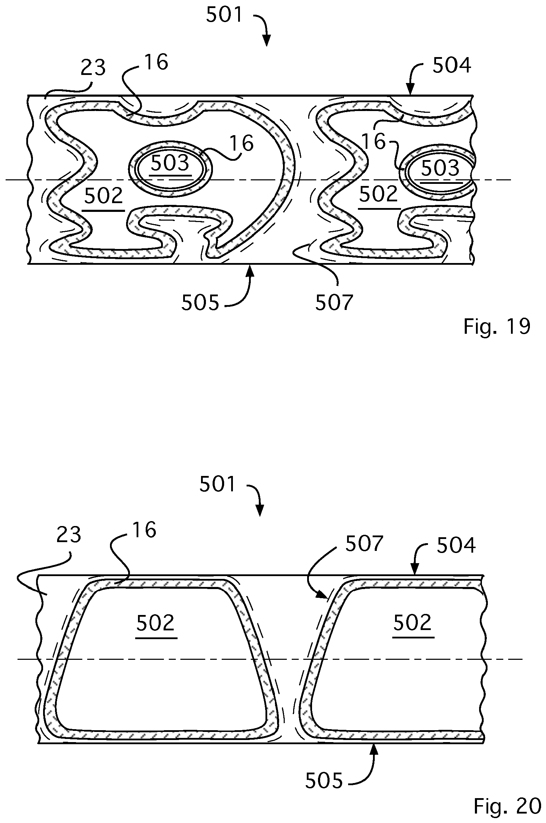

In den Figuren 19 und 20 ist kein Spalt zwischen benachbarten Strängen von Verbindungsmittel 16 ausgebildet. In Figur 19 weisen die Teilbereiche 502 eine unregelmäßige Form auf. Überdies ist ein Durchbruch 503 in dem Teilbereich 502 ausgebildet, wobei der Teilbereich 502 gegen den Durchbruch 503 mit Verbindungsmittel 16 abgeschlossen ist. Das Verbindungsmittel 16 umschließt dabei den Durchbruch 503 vollständig. Bei dem Durchbruch 503 kann es sich um eine Bohrung handeln. In Fig. 20 weisen die Teilbereiche 502 eine trapezförmige Form auf. In den Figuren 19 und 20 sind benachbarte Stränge von Verbindungsmittel 16 ebenfalls voneinander beabstandet. Um nach der Trennung zu vermeiden, dass Substrat stark über die äußere Kontur des Stranges von Verbindungsmittel 16 übersteht, kann die Trennung an Schnittlinien 507 erfolgen, die der äußeren Kontur der Stränge von Verbindungsmittel 16 folgen. Die Schnittkontur ist auf diese Weise nur gering von der äußeren Kontur des Stranges von Verbindungsmittel 16 beabstandet.

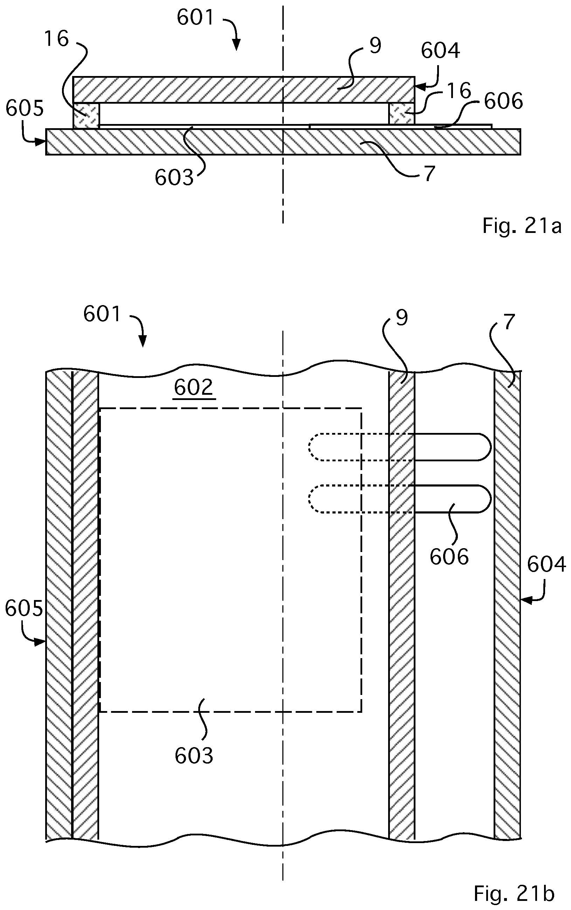

Die Figuren 21 bis 23 zeigen Ansichten von Substratverbünden 601 vor deren Trennung in Zuschnitte 41. Zur Vereinfachung der Darstellung sind Schutzfolien, die sich auf den Substraten befinden, in diesen Figuren nicht gezeigt. Die Figuren 21 bis 23 veranschaulichen, dass die Vorrichtung und das Verfahren der Erfindung die Herstellung von elektronischen Bauelementen ermöglichen, die in Form eines Substratverbundes als Bandware erhalten werden.

Der in Fig. 21 gezeigte Substratverbund 601 weist ein erstes Substrat 7 auf, auf dessen erste Flächenseite 12 Verbindungsmittel 16 in einem regelmäßigen Muster aufgetragen ist. Jeder Strang des Verbindungsmittels 16 umschließt einen Teilbereich 602 der Oberfläche des Substrates 7, der in Fig. 21b nicht vollständig gezeigt ist. Die äußere Kontur des Strangs von Verbindungsmittel 16 ist von an den Längskanten 604, 605 des Substratverbundes 601 beabstandet, so dass dort die erste Flächenseite 12 des Substrates 7 freiliegt. Auf den Teilbereich 602 ist ein aktives Element 603, das ein Hilfsmittel im Sinne der Erfindung ist, aufgebracht. Bei dem aktiven Element kann es sich beispielsweise um eine Solarzelle, ein Leuchtmittel, einen Filter, einen Sensor oder einen Aktor handeln. Auf das Verbindungsmittel 16 ist das zweite Substrat 9 aufgebracht, das den Teilbereich 602 abdeckt. Es ist in Fig. 21a zu erkennen, dass das zweite Substrat 9 eine geringe Breite als das erste Substrat 7 aufweist. In Fig. 21b sind die Ränder des zweiten Substrates 9 durch Schraffierungen angedeutet, die zur Verbesserung der Erkennbarkeit nicht über die gesamte Fläche des zweiten Substrates 9 geführt sind. Das aktive Element 603 ist vollständig von dem ersten und zweiten Substrat 7, 9 und dem Strang aus Verbindungsmittel 16 umschlossen. Um das aktive Element 603 kontaktieren zu können, sind streifenförmige Kontakte 606 auf die erste Flächenseite 12 des ersten Substrates 7 aufgebracht, die sich von dem aktiven Element 603 in Richtung der Längskante 604 erstrecken, so dass sie auf einem freiliegenden Bereich des ersten Substrates 7 selbst freiliegen.

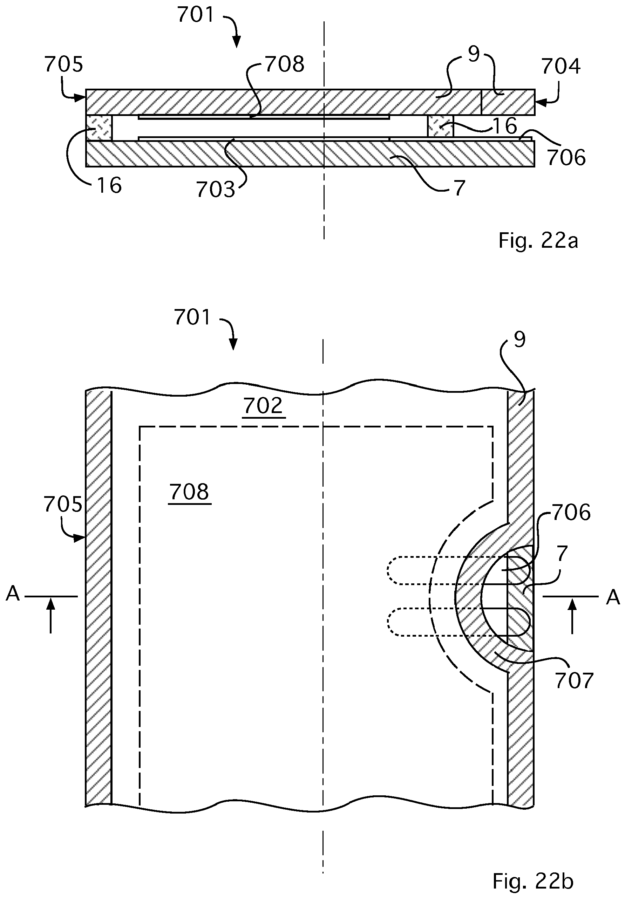

Der in Fig. 22 gezeigte Substratverbund 701 weist ein erstes Substrat 7 auf, auf dessen erste Flächenseite 12 Verbindungsmittel 16 in einem regelmäßigen Muster aufgetragen ist. Jeder Strang des Verbindungsmittels 16 umschließt einen Teilbereich 702 der Oberfläche des Substrates 7, der in Fig. 22b nicht vollständig gezeigt ist. Die äußere Kontur des Strangs von Verbindungsmittel 16 ist von einer Längskante 704 des Substratverbundes 701 beabstandet, so dass dort die erste Flächenseite 12 des Substrates 7 freiliegt. An die andere Längskante 705 grenzt die äußere Kontur des Strangs von Verbindungsmittel 16 bündig an. Auf den Teilbereich 702 ist ein aktives Element 703, das ein Hilfsmittel im Sinne der Erfindung ist, aufgebracht. Bei dem aktiven Element 703 kann es sich beispielsweise um eine Solarzelle, ein Leuchtmittel, einen Filter, einen Sensor oder einen Aktor handeln. Auf das Verbindungsmittel 16 ist das zweite Substrat 9 aufgebracht, das den Teilbereich 702 abdeckt. Die dem ersten Substrat 7 zugewandte, erste Flächenseite 21 des zweiten Substrats 9 ist ebenfalls mit einem aktiven Element 708 beschichtet. Bei dem aktiven Element 708, das ebenfalls ein Hilfsmittel im Sinne der vorliegenden Erfindung ist, kann es sich beispielsweise um eine Solarzelle, ein Leuchtmittel, einen Filter, einen Sensor oder einen Aktor handeln. Das aktive Element 708 liegt dem aktiven Element 703 gegenüber und befindet sich ebenfalls zwischen dem Strang von Verbindungsmittel 16. Es ist in Fig. 22a zu erkennen, dass das zweite Substrat 9, abgesehen von der Ausnehmung 707, die gleiche Breite wie das erste Substrat 7 aufweist. In Fig. 22b sind die Ränder des zweiten Substrates 9 durch Schraffierungen angedeutet, die zur Verbesserung der Erkennbarkeit nicht über die gesamte Fläche des zweiten Substrates 9 geführt sind. Die aktiven Elemente 703, 708 sind vollständig von dem ersten und zweiten Substrat 7, 9 und dem Strang aus Verbindungsmittel 16 umschlossen. Um die aktiven Elemente 703, 708 kontaktieren zu können, sind streifenförmige Kontakte 706 auf die erste Flächenseite 12 des ersten Substrates 7 aufgebracht, die sich von dem aktiven Element 703 in Richtung der Längskante 704 erstrecken, so dass sie auf einem freiliegenden Bereich des ersten Substrates 7 selbst freiliegen. Um den Zugang zu den freiliegenden Abschnitten der Kontakte 706 zu erleichtern, ist in dem zweiten Substrat eine als Ausklinkung bezeichnete Ausnehmung ausgebildet, so dass die Kontakte 706 nicht vollständig von dem zweiten Substrat überdeckt werden.

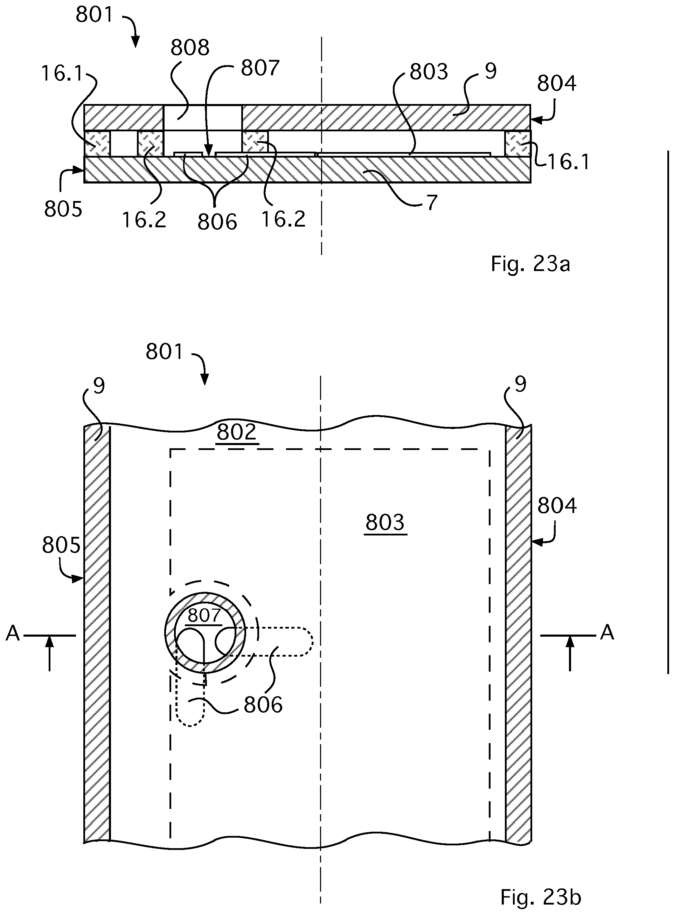

Der in Fig. 23 gezeigte Substratverbund 801 weist ein erstes Substrat 7 auf, auf dessen erste Flächenseite 12 Verbindungsmittel 16 in einem regelmäßigen Muster aufgetragen ist. Dabei ist die Wiederholungseinheit des Musters aus jeweils zwei Strängen des Verbindungsmittels 16 gebildet. Der erste Strang des Verbindungsmittels 16.1 umschließt einen Teilbereich 802 der Oberfläche des Substrates 7, der in Fig. 23b nicht vollständig gezeigt ist. Die äußere Kontur des Strangs von Verbindungsmittel 16 grenzt dabei an die Längskanten 804, 805 des Substratverbundes 801 bündig an. Der Teilbereich 802 weist eine kreisförmige Ausnehmung 807 auf, die von dem zweiten Strang des Verbindungsmittels 16.2 umgeben ist. Auf den Teilbereich 802 ist ein aktives Element 803, das ein Hilfsmittel im Sinne der Erfindung ist, aufgebracht. Bei dem aktiven Element 803 kann es sich beispielsweise um eine Solarzelle, ein Leuchtmittel, einen Filter, einen Sensor oder einen Aktor handeln. Auf das Verbindungsmittel 16 ist das zweite Substrat 9 aufgebracht, das den Teilbereich 802 abdeckt. Dazu ist auch in dem zweiten Substrat 9 eine Öffnung 808, die fluchtend zu der Ausnehmung 807 im Teilbereich 802 angeordnet ist, ausgebildet. Es ist in Fig. 21a zu erkennen, dass das zweite Substrat 9 die gleiche Breite wie das erste Substrat 7 aufweist. In Fig. 21b sind die Ränder des zweiten Substrates 9 durch Schraffierungen angedeutet, die zur Verbesserung der Erkennbarkeit nicht über die gesamte Fläche des zweiten Substrates 9 geführt sind. Das aktive Element 803 ist vollständig von dem ersten und zweiten Substrat 7, 9 und den Strängen aus Verbindungsmittel 16.1, 16.2 umschlossen. Um das aktive Element 803 kontaktieren zu können, sind streifenförmige Kontakte 806 auf die erste Flächenseite 12 des ersten Substrates 7 aufgebracht, die sich von dem aktiven Element 803 zu der Ausnehmung 807 erstrecken. Damit sind Kontakte 806 über die Öffnung 808 in dem zweiten Substrat 9 von außen zugänglich.

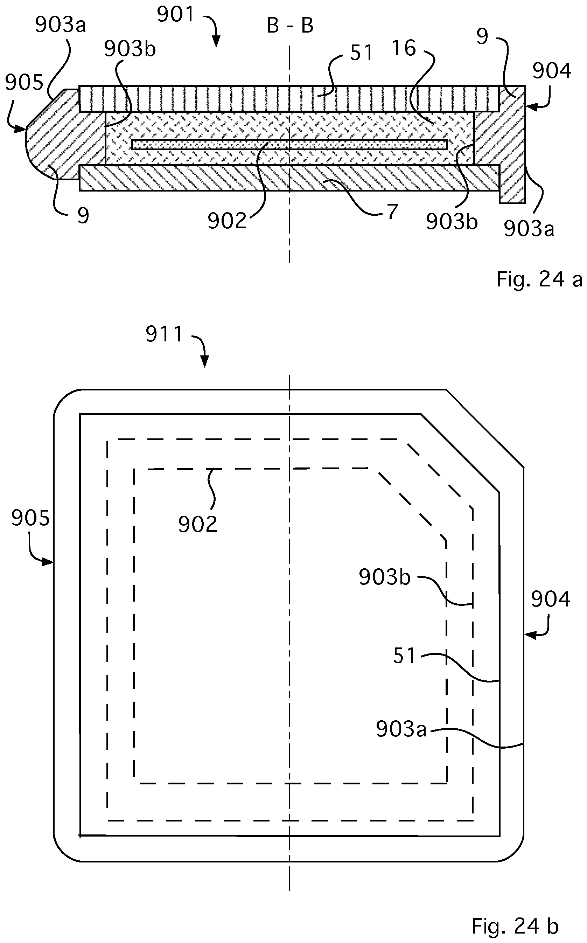

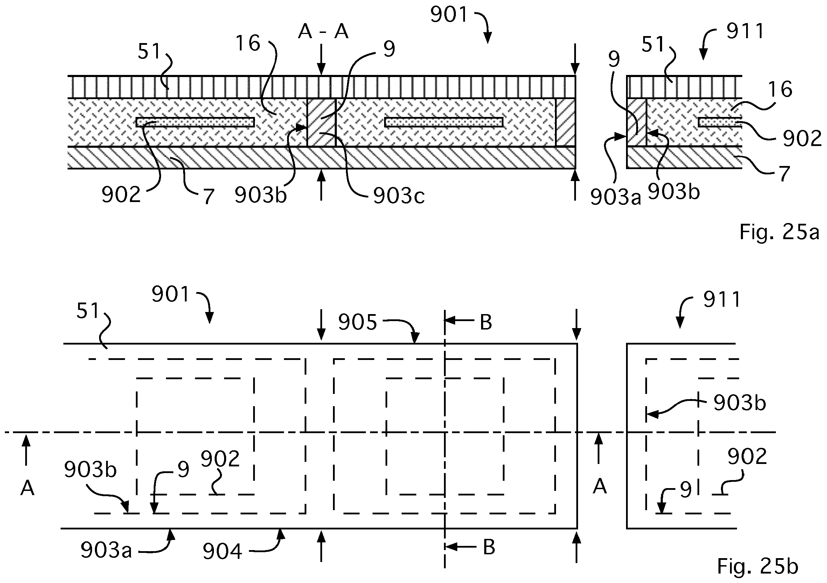

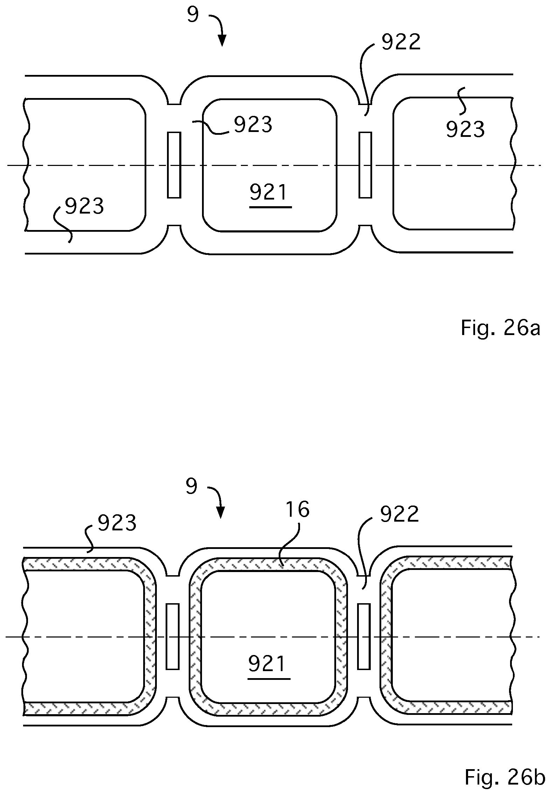

Fig. 24a zeigt einen Substratverbund 901, aus dem durch Zuschneiden Bauelemente 911, von denen eines in Fig. 24b gezeigt ist, erhalten werden. Der Substratverbund 901 weist ein erstes Substrat 7, auf das Verbindungsmittel 16 aufgebracht ist, auf. In dem Verbindungsmittel 16 ist eine Zwischenlage 902 angeordnet, die vollständig von dem Verbindungsmittel 16 umgeben ist. Das Verbindungsmittel 16 dichtet damit die Zwischenlage 902 vollständig ab. Die Zwischenlage 902, die kein bandförmiges Substrat ist, kann auch als Inlay bezeichnet werden. Bei der Zwischenlage 902 kann es sich beispielsweise um ein elektronisches Bauelement, einen Filter, ein Beleuchtungselement oder ein Solarelement handeln, wobei die Aufzählung nicht abschließend ist und auch andere Inlays vorgesehen sein können. Ferner weist der Substratverbund 901 ein zweites Substrat 9 auf, das Rahmen und auf diese Weise eine Stützstruktur bildet. Zur Ausbildung der Rahmen sind in dem zweiten Substrat 9 in regelmäßigen Abständen Öffnungen eingebracht, zwischen denen Stege 903c (siehe auch Figuren 25a, 25b und 26) ausgebildet sind. Durch diese Stege 903c führt der Schnitt, wenn aus dem Substratverbund 901 Bauelemente 911 zugeschnitten werden. Dabei bleibt der Rahmen erhalten, so dass jedes Bauelement 911 einen Rahmen aufweist. Der Rahmen umschließt einen Teilbereich der ersten Flächenseite 12 des ersten Substrates 7 und einen gegenüberliegenden Teilbereich der ersten Flächenseite 56 des dritten Substrates 51. Das erste und dritte Substrat 7, 51 grenzen an ihren Längskanten jeweils an das zweite Substrat 9 an. Innerhalb der vom Rahmen umschlossenen Öffnung im zweiten Substrat 9 befinden sich das Verbindungsmittel 16 und die Zwischenlage 902. Der Rahmen kann beispielsweise aus einem stabilen Kunststoff bestehen.

Es ist in Fig. 24a zu erkennen, dass das zweite Substrat 9 an den Längskanten 904, 905 des Substratverbundes 901 über das erste und zweite Substrat 7, 9 übersteht. Dabei ist die Außenkante 903a des zweiten Substrates an der Längskante 904 flach geformt, an der Längskante 905 hingegen konvex gewölbt. Die Innenkanten 903b, die die Öffnungen in dem zweiten Substrat 9 umschließen, liegen zwischen dem ersten und dem dritten Substrat 7, 51 und nach innen versetzt zu deren Längskanten, so dass das zweite Substrat 9 an dem ersten und dem dritten Substrat 7, 51 anliegt.

Der in den Figuren 25a und 25b gezeigte Substratverbund 901 entspricht dem in den Figuren 24a und 24b gezeigten Substratverbund, außer dass das zweite Substrat 9 nicht an den Längskanten 904, 905 des Substratverbundes 901 übersteht, sondern dort bündig abschließt.

Auch wenn in den Figuren 24 und 25 jeweils nur eine Zwischenlage gezeigt ist, so kann ein Substratverbund mehrere Zwischenlagen aufweisen.

Die in den Figuren 24a bis 25b gezeigten Substratverbünde können mit der in Fig. 2 gezeigten zweiten Ausführungsform der erfindungsgemäßen Vorrichtung 1 hergestellt werden. Dabei wird die Zwischenlage 902 nach dem Aufbringen des Verbindungsmittels 16 auf die erste Flächenseite 12 des ersten Substrates 7, das das Grundsubstrat bildet, in das Verbindungsmittel 16 eingelegt und dann erneut Verbindungsmittel aufgebracht, das die Zwischenlage 902 überdeckt. Anschließend werden das zweite Substrat 9, das die Rahmen bildet und als Stützstruktur dient, sowie das dritte Substrat 51, das das Decksubstrat bildet, in der Verbindungseinrichtung 28 aufgebracht. Zum Einlegen der Zwischenlage 902 in das Verbindungsmittel 16 kann die erfindungsgemäße Vorrichtung 1 eine Einlegeeinrichtung (nicht gezeigt) aufweisen.

Der Rahmen, den das zweite Substrat 9 bildet, steht in der in den Figuren 24a und 24b gezeigten Ausführungsform des Substratverbundes 901 über die Längskanten des ersten und dritten Substrates 7, 51 über. Damit bildet allein das zweite Substrat 9 die Längskanten 904, 905 des Substratverbundes 901, und zwar mit seinen Außenkanten 903a. Damit werden das erste und dritte Substrat 7, 51, also das Grundsubstrat und das Decksubstrat geschützt, was insbesondere dann vorteilhaft ist, wenn eine Weiterverarbeitung die empfindlichen Kanten des ersten und dritten Substrates 7, 51 beschädigen könnte.

Fig. 26a zeigt ein zweites bandförmiges Substrat 9, das bei der Herstellung von Substratverbünden eingesetzt werden kann, die mehr als zwei Substrate aufweisen, wobei das gezeigte zweite Substrat 9 zwischen zwei Substraten angeordnet ist. Das gezeigte Substrat 9 weist in regelmäßigen Abständen Öffnungen 921 auf. Zwischen benachbarten Öffnungen 921 sind Stege 922 ausgebildet. Entlang dieser Stege 922 wird der Substratverbund, der das gezeigte zweite bandförmige Substrat 9 aufweist, getrennt. Die Stege 921 ermöglichen es, Rahmen 923 als bandförmiges Substrat bereitzustellen. Damit können die Rahmen 923 vorkonfektioniert bereitgestellt werden. In Fig. 26b ist zu erkennen, dass bei der Herstellung eines Substratverbundes Verbindungsmittel 16 so auf ein später im Substratverbund angrenzendes Substrat (beispielsweise das erste Substrat 7) aufgebracht werden muss, dass sich das Verbindungsmittel 16 in den Öffnungen 921, d. h. innerhalb der Rahmen 923, befindet.

### Bezugszeichenliste

1 Vorrichtung; 2 Verbindungskammer; 3 Wandung; 3a Segment; 3b Segment; 4 Innenraum; 5 Pumpe; 6 erster Abwickler; 7 erstes bandförmiges Substrat; 8 zweiter Abwickler; 9 zweites bandförmiges Substrat; 10 erste Führungsrolle; 10.1 Führungsrolle für das erste Substrat; 10.2 Führungsrolle für das zweite Substrat; 10.3 Führungsrolle für das dritte Substrat; 11 Auftragungseinrichtung; 11a erste Auftragungseinheit; 11b zweite Auftragungseinheit; 12 erste Flächenseite des ersten bandförmigen Substrates; 13 zweite Flächenseite des ersten bandförmigen Substrates; 14 Schutzfolie; 15 Abwickler für die Schutzfolie; 16 Verbindungsmittel; 17 Stützrolle; 18 erste Durchführung; 19 Rolle; 20 Rolle; 21 erste Flächenseite des zweiten bandförmigen Substrates; 22 zweite Flächenseite des zweiten bandförmigen Substrates; 23 Schutzfolie; 24 Abwickler für die Schutzfolie; 25 zweite Durchführung; 26 Rolle; 27 Rolle; 28 Verbindungseinrichtung; 29 Rolle; 30 Rolle; 31, 31' Substratverbund; 32 Kalibrierungseinrichtung; 33 Rolle; 34 Rolle; 35 erste Außenseite; 36 zweite Außenseite; 37 dritte Durchführung; 38 Rolle; 39 Rolle; 40 Trenneinrichtung; 41, 41' Zuschnitt; 42 zweite Führungsrolle; 51 drittes bandförmiges Substrat; 52 zweite Auftragungseinrichtung; 52a erste Auftragungseinheit; 52b zweite Auftragungseinheit; 53 zweites Verbindungsmittel; 54 Stützrolle; 55 dritter Abwickler; 56 erste Flächenseite des dritten bandförmigen Substrates; 57 zweite Flächenseite des dritten bandförmigen Substrates; 58 Schutzfolie; 59 Abwickler; 60 vierte Durchführung; 61 Rolle; 62 Rolle; 70 Kalibrierungseinrichtung; 71 untere Kalibrierebene; 72 Prozesselement; 73 Fixierung; 74 obere Kalibrierebene; 75 Durchführung; 76 Antrieb; 81 Bearbeitungseinrichtung; 82 endliches Transportband; 83 Abwickler; 84 Aufwickler; 85 erste Flächenseite des Transportbandes; 86 zweite Flächenseite des Transportbandes; 87 endloses Transportband; 88 Führungsrollen; 89 erste Flächenseite des Transportbandes; 90zweite Flächenseite des Transportbandes; 91 Bearbeitungskammer; 92 Wandung; 93 Innenraum; 94 Trennwand; 95 fünfte Durchführung; 96 Rolle; 97 Rolle; 98 Öffnung; 99 Flansch; 100 erstes Abwicklergehäuse; 101 Gehäusewandung; 102 Gehäuseinnenraum; 103 Ventil; 104 zweites Abwicklergehäuse; 105 Gehäusewandung; 106 Gehäuseinnenraum; 107 Ventil; 201 Substratverbund; 202 Kontaktbahn; 203 Bereich; 204 Längskante; 205 Längskante; 301 Substratverbund; 304 Längskante; 305 Längskante; 306 Spalt; 401 Substratverbund; 402 Bereich; 403 Durchbruch; 404 Längskante; 405 Längskante; 406 Spalt; 501 Substratverbund; 502 Teilbereich; 503 Durchbruch; 504 Längskante; 505 Längskante; 506 Spalt; 507 Schnittlinie; 601 Substratverbund; 602 Teilbereich; 603 aktives Element; 604 Längskante; 605 Längskante; 606 Kontakt; 701 Substratverbund; 702 Teilbereich; 703 aktives Element; 704 Längskante; 705 Längskante; 706 Kontakt; 707 Ausnehmung; 708 aktives Element; 801 Substratverbund; 802 Teilbereich; 803 aktives Element; 804 Längskante; 805 Längskante; 806 Kontakt; 807 Ausnehmung; 808 Öffnung; 901 Substratverbund; 902 Zwischenlage; 903a Außenkante; 903b Innenkante; 903c Steg; 904 Längskante; 905 Längskante; 911 Bauelement; 921 Öffnung; 922 Steg; 923 Rahmen.

## Patentansprüche

1. Vorrichtung zum Herstellen eines Substratverbundes (31), der zumindest ein erstes bandförmiges Substrat (7), ein zweites bandförmiges Substrat (9) und ein Verbindungsmittel (16), das auf eine erste Flächenseite (12) des ersten Substrates (7) aufgetragen ist, umfasst, wobei die Vorrichtung (1) eine von der Umgebung abgeschlossene Verbindungskammer (2) aufweist, in der von der Umgebung abweichende physikalische und/oder chemische Bedingungen herrschen, wobei die Vorrichtung (1) ferner aufweist:
- Führungseinrichtungen (10) zum Führen des ersten Substrates (7), auf dessen erste Flächenseite (12) das Verbindungsmittel (16) aufgetragen ist, und des zweiten Substrates (9) derart, dass in der Verbindungskammer (2) eine erste Flächenseite (21) des zweiten Substrates (9) der ersten Flächenseite (12) des ersten Substrates (7) zugewandt ist; und
- eine in der Verbindungskammer (2) angeordnete Verbindungseinrichtung (28) zum Herstellen des Substratverbundes (31) innerhalb der Verbindungskammer;
**dadurch gekennzeichnet, dass** die Verbindungseinrichtung (28) zum Herstellen des Substratverbundes (31) zumindest ein Paar von einander unter Ausbildung eines Spaltes gegenüberliegenden Rollen (29, 30) aufweist, durch den Spalt die Substrate (7, 9) unter Erhalt des Substratverbundes (31) geführt werden können, so dass das Verbindungsmittel (16), das sich auf der ersten Flächenseite des ersten Substrates (7) befindet, in Kontakt mit der ersten Flächenseite des zweiten Substrates (9) gelangen kann, und die Rollen ein Zusammenlegen der Substrate (7, 9) in dem Spalt auf eine substratschonende Weise bewirken können, ohne dass die Rollen (29, 30) der Verbindungseinrichtung (28) Druck auf die Substrate (7, 9) ausüben, und
dass die Vorrichtung ferner eine Kalibrierungseinrichtung (32) zum Kalibrieren der Stärke des Substratverbundes (31) umfasst.

2. Vorrichtung nach Anspruch 1, **dadurch gekennzeichnet, dass** sie eine erste Auftragungseinrichtung (11) zum Auftragen des Verbindungsmittels (16) auf die erste Flächenseite (12) des ersten Substrates (7) aufweist.

3. Vorrichtung nach Anspruch 2, **dadurch gekennzeichnet, dass** die erste Auftragungseinrichtung (11) außerhalb der Verbindungskammer (2) angeordnet ist.

4. Vorrichtung nach einem der vorstehenden Ansprüche, **dadurch gekennzeichnet, dass** in der Verbindungskammer (2) Vakuum herrscht.

5. Vorrichtung nach einem der vorstehenden Ansprüche, **dadurch gekennzeichnet, dass** sie eine Vorrichtung zur Herstellung eines Substratverbundes (31), der zumindest ein erstes bandförmiges Substrat (7), ein zweites bandförmiges Substrat (9) und ein Verbindungsmittel (16), das auf eine erste Flächenseite (12) des ersten Substrates (7) aufgetragen ist, umfasst, ist, wobei zumindest eines der bandförmigen Substrate (7, 9) einen bandförmigen Träger aufweist, auf dem flächige Zuschnitte angeordnet sind.

6. Vorrichtung nach einem der vorstehenden Ansprüche, **dadurch gekennzeichnet, dass** sie Bereitstellungseinrichtungen (6, 8) zum kontinuierlichen Bereitstellen der Substrate (7, 9) aufweist, von denen die Substrate (7, 9) mittels der Führungseinrichtungen (10) zu der Verbindungseinrichtung (28) geführt werden, wobei die Bereitstellungseinrichtungen (6, 8) aus der Gruppe ausgewählt sind, die Abwickler zum Abwickeln eines Substrates von einer Rolle und Abnehmer zum Abnehmen eines Substrates von einem mäanderförmigen Stapel des Substrates umfasst.

7. Vorrichtung nach einem der vorstehenden Ansprüche, **dadurch gekennzeichnet, dass** sie eine Bearbeitungseinrichtung (81) zum Bearbeiten zumindest eines Substrates (7, 9) oder des Substratverbundes (31) aufweist.

8. Verfahren zum Herstellen eines Substratverbundes (31), der zumindest ein erstes bandförmiges Substrat (7) und ein zweites bandförmiges Substrat (9) umfasst, in einer von der Umgebung abgeschlossenen Verbindungskammer (2), in der von der Umgebung abweichende physikalische und/oder chemische Bedingungen herrschen, wobei es die Schritte umfasst:
- kontinuierliches Führen der Substrate (7, 9) unter Auftragung eines Verbindungsmittels (16) auf eine erste Flächenseite (12) des ersten Substrates (7) in die Verbindungskammer (2), so dass in der Verbindungskammer (2) eine erste Flächenseite (21) des zweiten Substrates (9) der ersten Flächenseite (12) des ersten Substrates (7) zugewandt ist; und
- Herstellen des Substratverbundes (31) zwischen den zumindest zwei bandförmigen Substraten (7, 9) in der Verbindungskammer (2);
**dadurch gekennzeichnet, dass** die Substrate (7, 9) unter Erhalt des Substratverbundes (31) durch einen Spalt geführt werden, der zwischen zumindest einem Paar von gegenüberliegenden Rollen (29, 30) einer Verbindungseinrichtung (28) ausgebildet ist, so dass das Verbindungsmittel (16), das sich auf der ersten Flächenseite des ersten Substrates (7) befindet, in Kontakt mit der ersten Flächenseite des zweiten Substrates (9) gelangt, und wobei die Rollen (29, 30) ein Zusammenlegen der Substrate (7, 9) in dem Spalt auf eine substratschonende Weise bewirken, ohne dass die Rollen (29, 30) der Verbindungseinrichtung (28) Druck auf die Substrate (7, 9) ausüben, und
dass der Substratverbund (31) im Anschluss an die Verbindungseinrichtung (28) eine Kalibrierungseinrichtung (32) zum Kalibrieren der Stärke des Substratverbundes (31) durchläuft.

9. Verfahren nach Anspruch 8, **dadurch gekennzeichnet, dass** das Verbindungsmittel (16) in Form von Strängen auf die erste Flächenseite (12) des ersten Substrates (7) aufgetragen wird und die Stränge derart ausgebildet werden, dass jeder Strang eine Teilfläche der ersten Flächenseite (12) des ersten Substrates (7) umgrenzt.

10. Verfahren nach Anspruch 9, **dadurch gekennzeichnet, dass** auf von einem Strang umgrenzten Teilflächen zumindest ein weiteres Verbindungsmittel (16.2) und/oder zumindest ein Hilfsmittel (902) aufgebracht wird, wobei das Hilfsmittel (902) aus der Gruppe ausgewählt wird, die mechanische Elemente, optische Elemente, elektronische Komponenten, optoelektronische Komponenten, chemische Stoffe und Stoffgemische in gasförmiger, flüssiger oder fester Form sowie Kombinationen davon umfasst.

11. Verfahren nach einem der Ansprüche 8 bis 10, **dadurch gekennzeichnet, dass** der Substratverbund (31) aus der Verbindungskammer (2) geführt und anschließend als Band bereitgestellt oder zugeschnitten wird.

## Claims

1. A device for producing a substrate composite (31) comprising at least one first band-shaped substrate (7), a second band-shaped substrate (9), and a bonding means (16) applied to a first surface side (12) of the first substrate (7), the device (1) having a bonding chamber (2) sealed off from the environment in which physical and/or chemical conditions prevail that deviate from the environment, wherein the device (1) further comprises:
- guiding facilities (10) to guide the first substrate (7), onto the first surface side (12) of which the bonding means (16) is applied, and the second substrate (9) such that in the bonding chamber (2) a first surface side (21) of the second substrate (9) is facing the first surface side (12) of the first substrate (7); and
- a bonding facility (28) which is arranged in the bonding chamber (2) for producing the substrate composite (31) within the bonding chamber;
**characterized in that** the bonding facility (28) for producing the substrate composite (31) has at least one pair of rollers (29, 30) that are opposite to each other to form a gap, substrates (7, 9) can be guided through the gap to obtain the substrate composite (31), so that the bonding means (16) being present on the first surface side of the first substrate (7) can come into contact with the first surface side of the second substrate (9), and the rollers can effect combining of the substrates (7, 9) in the gap in a substrate-protecting manner without the rollers (29, 30) of the bonding facility (28) applying pressure to the substrates (7, 9), and
that the device further comprises a calibration facility (32) to calibrate the thickness of the substrate composite (31).

2. The device according to claim 1, **characterized in that** it has a first application facility (11) to apply the bonding means (16) to the first surface side (12) of the first substrate (7).

3. The device according to claim 2, **characterized in that** the first application facility (11) is arranged outside the bonding chamber (2).

4. The device according to any of the preceding claims, **characterized in that** there is vacuum in the bonding chamber (2).

5. The device according to any of the preceding claims, **characterized in that** it is a device for producing a substrate composite (31) that comprises at least one first band-shaped substrate (7), a second band-shaped substrate (9), and a bonding means (16) applied to a first surface side (12) of the first substrate (7), wherein at least one of the band-shaped substrates (7, 9) has a band-shaped carrier on which flat cuts are arranged.

6. The device according to any of the preceding claims, **characterized in that** it has provision facilities (6, 8) to continuously provide the substrates (7, 9) from which the substrates (7, 9) are guided to the bonding facility (28) by means of the guiding facilities (10), wherein the provision facilities (6, 8) are selected from the group comprising decoilers to decoil a substrate from a roller and doffers to doff a substrate from a meandering stack of the substrate.

7. The device according to any of the preceding claims, **characterized in that** it has a processing facility (81) to process at least one substrate (7, 9) or the substrate composite (31).

8. A method for producing a substrate composite (31) comprising at least one first band-shaped substrate (7) and a second band-shaped substrate (9) in a bonding chamber (2) sealed off from the environment in which physical and/or chemical conditions prevail that deviate from the environment, the method comprising the steps of:
- continuously guiding the substrates (7, 9) with application of a bonding means (16) onto a first surface side (12) of the first substrate (7) into the bonding chamber (2), so that in the bonding chamber (2) a first surface side (21) of the second substrate (9) is facing the first surface side (12) of the first substrate (7); and
- producing the substrate composite (31) between the at least two band-shaped substrates (7, 9) in the bonding chamber (2);
**characterized in that** the substrates (7, 9) are guided through a gap formed between at least one pair of opposite rollers (29, 30) of a bonding facility (28) to obtain the substrate composite (31), so that the bonding means (16) on the first surface side of the first substrate (7) comes into contact with the first surface side of the second substrate (9), and wherein the rollers (29, 30) effect combining of the substrates (7, 9) in the gap in a substrate-protecting manner without the rollers (29, 30) of the bonding facility (28) applying pressure to the substrates (7, 9), and
that the substrate composite (31) following the bonding facility (28) passes a calibration facility (32) to calibrate the thickness of the substrate composite (31).

9. The method according to claim 8, **characterized in that** the bonding means (16) is applied to the first surface side (12) of the first substrate (7) in the form of strands and the strands are formed such that each strand defines a partial surface of the first surface side (12) of the first substrate (7).

10. The method according to claim 9, **characterized in that** at least one further bonding means (16.2) and/or at least one auxiliary agent (902) is applied to partial surfaces defined by a strand, wherein the auxiliary agent (902) is selected from the group comprising mechanical elements, optical elements, electronic components, opto-electronic components, chemical substances and mixtures of substances in gaseous, liquid, or solid form, as well as combinations thereof.

11. The method according to any of claims 8 to 10, **characterized in that** the substrate composite (31) is guided out of the bonding chamber (2) and subsequently is provided or cut as a band.

## Revendications

1. Dispositif pour la fabrication d'un substrat composite (31) qui comprend au moins un premier substrat (7) en forme de bande, un second substrat (9) en forme de bande et un agent d'assemblage (16) qui est appliqué sur une première face (12) du premier substrat (7), le dispositif (1) présentant une chambre d'assemblage (2) isolée de l'entourage dans laquelle règnent des conditions physiques et/ou chimiques différentes de celles de l'entourage, ledit dispositif (1) présentant en outre:
- des systèmes de guidage (10) pour guider le premier substrat (7) sur la première face (12) duquel est appliqué l'agent d'assemblage (16), et pour guider le deuxième substrat (9) de façon à ce que dans la chambre d'assemblage (2) une première face (21) du deuxième substrat (9) soit orientée vers la première face (12) du premier substrat (7) ; et
- un système d'assemblage (28) aménagé dans la chambre d'assemblage (2) pour la fabrication du substrat composite (31) à l'intérieur de la chambre d'assemblage;
**caractérisé par le fait que** le système d'assemblage (28) présente, pour la fabrication du substrat composite (31), au moins une paire de rouleaux (29, 30) se faisant face en formant un interstice, que les substrats (7, 9) puissent être guidés à travers l'interstice en fabricant le substrat composite (31), de sorte que l'agent d'assemblage (16), qui se trouve sur la première face du premier substrat (7), puisse venir en contact avec la première face du deuxième substrat (9), et que les rouleaux puissent opérer un assemblage des substrats (7, 9) dans l'interstice de façon à ménager les substrats sans que les rouleaux (29, 30) du système d'assemblage (28) opèrent une pression sur les substrats (7, 9), et
que le dispositif comprenne en outre un système de calibrage (32) pour calibrer l'épaisseur du substrat composite (31).

2. Dispositif selon la revendication 1, **caractérisé par le fait qu'**il présente un premier système d'application (11) pour appliquer l'agent d'assemblage (16) sur la première face (12) du premier substrat (7).

3. Dispositif selon la revendication 2, **caractérisé par le fait que** le premier système d'application (11) est placé hors de la chambre d'assemblage (2).

4. Dispositif selon une des revendications précédentes **caractérisé par le fait que** le vide règne dans la chambre d'assemblage (2).

5. Dispositif selon une des revendications précédentes **caractérisé par le fait qu'**il est un dispositif pour la fabrication d'un substrat composite (31) qui comprend au moins un premier substrat (7) en forme de bande, un deuxième substrat (9) en forme de bande et un agent de d'assemblage (16) qui est appliqué sur une première face (12) du premier substrat (7), étant donné qu'au moins un des substrats (7, 9) en forme de bande présente un support en forme de bande sur lequel sont disposées des portions de bande.

6. Dispositif selon une des revendications précédentes **caractérisé par le fait qu'**il présente des systèmes d'approvisionnement (6, 8) pour approvisionner en continu les substrats (7, 9), lesdits systèmes guidant les substrats (7, 9) au moyen des systèmes de guidage (10) vers le système d'assemblage (28), étant donné que lesdits systèmes d'approvisionnement (6, 8) sont choisis dans le groupe qui comprend des dérouleurs pour débiter un substrat de la bobine et des récepteurs pour recevoir un substrat à partir de méandres de substrat déroulé.

7. Dispositif selon une des revendications précédentes **caractérisé par le fait qu'**il présente un système de travail (81) pour traiter au moins un des substrats (7, 9) ou le substrat composite (31).

8. Procédé pour la fabrication d'un substrat composite (31) qui comprend au moins un premier substrat (7) en forme de bande et un deuxième substrat (9) en forme de bande, dans une chambre d'assemblage (2) dans laquelle règnent des conditions physiques et/ou chimiques différentes de celles de l'environnement, le procédé comprend les étapes :
- un guidage continu des substrats (7, 9) avec application d'un agent d'assemblage (16) sur une première face (12) du premier substrat (7) dans la chambre d'assemblage (2), de sorte que dans la chambre d'assemblage (2) une première face (21) du deuxième substrat (9) est orientée vers la première face (12) du premier substrat (7) ; et
- la fabrication du substrat composite (31) positionné entre au moins deux substrats (7, 9) en forme de bande dans la chambre d'assemblage (2) ;
**caractérisé par le fait que** les substrats (7, 9) sont, en fabricant le substrat composite (31), guidés à travers un interstice formé entre au moins une paire de rouleaux (29, 30) se faisant face dans un système d'assemblage (28), de sorte que l'agent d'assemblage (16) qui se trouve sur la première face du premier substrat (7) vienne en contact avec la première face du deuxième substrat (9) et que les rouleaux (29, 30) opèrent un assemblage des substrats (7, 9) dans l'interstice de façon à ménager les substrats sans que les rouleaux (29, 30) du système d'assemblage (28) opèrent une pression sur les substrats (7, 9) et
que le substrat composite (31), en liaison avec le système d'assemblage (28), passe par un système de calibrage (32) pour calibrer l'épaisseur du substrat composite (31).

9. Procédé selon la revendication 8, **caractérisé par le fait que** l'agent d'assemblage (16) en forme de cordons est appliqué sur la première face (12) du premier substrat (7) et que les cordons sont formés de telle sorte que chacun des cordons délimite une partie de surface de la première face (12) du premier substrat (7).

10. Procédé selon la revendication 9, **caractérisé par le fait que** sur des parties de surface délimitées par le cordon est disposé un agent d'assemblage supplémentaire (16.2) et/ou est positionné au moins un moyen auxiliaire (902), ce moyen auxiliaire (902) étant choisi parmi le groupe qui comprend des éléments mécaniques, des éléments optiques, des composants électroniques, des composants optoélectroniques, des substances chimiques et des substances composées sous forme gazeuse, liquide ou solide ainsi que des combinaisons de ceux-ci.

11. Procédé selon une des revendications 8 à 10, **caractérisé par le fait que** le substrat composite (31) est guidé hors de la chambre d'assemblage (2) et est présenté ensuite sous forme de bande continue ou découpée.
